# EUROPÄISCHE PATENTSCHRIFT

(11) **EP 2 909 132 B1**
(45) Veröffentlichungstag und Bekanntmachung des Hinweises auf die Patenterteilung: **17.06.2020**
(21) Anmeldenummer: 13779555.5
(22) Anmeldetag: 16.10.2013
(51) Int. Cl.: C01B 7/07

(54) **VERFAHREN ZUM KONZENTRIEREN WÄSSRIGER HALOGENWASSERSTOFFLÖSUNGEN**
METHOD FOR CONCENTRATING AQUEOUS HYDROGEN HALIDE SOLUTIONS
PROCÉDÉ DE CONCENTRATION DE SOLUTIONS AQUEUSES D'HYDRACIDES HALOGÉNÉS

(30) Priorität: 19.10.2012 DE 102012219153
(43) Veröffentlichungstag der Anmeldung: 26.08.2015
(73) Patentinhaber: SGL Carbon SE, 65201 Wiesbaden (DE)
(72) Erfinder: PÖLLMANN, Peter, 86405 Meitingen (DE); FRANZ, Marcus, 86405 Meitingen (DE); BOUCAUT, André, 86405 Meitingen (DE); AMBRASSAT, Rolf, 86405 Meitingen (DE)
(86) Internationale Anmeldenummer: PCT/EP2013/071611
(87) Internationale Veröffentlichungsnummer: WO 2014/060467

(56) Entgegenhaltungen:
- EP-A1- 0 425 922
- DE-A1- 3 521 632
- GB-A- 339 671
- GB-A- 669 671
- US-A- 2 542 961
- Norbert Asprion ET AL: "Energy Management in Chemical Industry" In: "Ullmann's Encyclopedia of Industrial Chemistry", 15. September 2010 (2010-09-15), Wiley-VCH Verlag GmbH & Co. KGaA, Weinheim, Germany, XP055023075, ISBN: 978-3-52-730673-2 DOI: 10.1002/14356007.b03_12.pub2, Seiten 501,505, Seite 513

## Beschreibung

Die vorliegende Erfindung betrifft ein Verfahren zum Konzentrieren einer wässrigen Halogenwasserstofflösung, insbesondere von Salzsäure, und eine Anlage zum Konzentrieren einer wässrigen Halogenwasserstofflösung.

DE 35 21 632 A1 beschreibt ein Verfahren zum Behandeln einer Eisenchlorid und Salzsäure enthaltenden wässrigen Lösung. Das US Patent Nr. 2,542,961 gibt ein Verfahren an, bei dem man ein Chlorwasserstoff enthaltendes Reaktionsgemisch in einer Absorptionszone mit einem gekühlten flüssigen Absorptionsmedium in Kontakt bringt. EP 0 425 922 A1 betrifft die Reinigung und Aufkonzentrierung von verdünnter verunreinigter Salzsäure. GB 669 671 A betrifft die Herstellung gasförmigen Chlorwasserstoffs aus dessen wässriger Lösung.

Wässrige Halogenwasserstofflösungen, wie z.B. Salzsäure, fallen bei einer Vielzahl von Prozessen, wie z.B. in Produktionsverfahren der chemischen Industrie oder bei der Verbrennung von Abfällen, an. Dabei handelt es sich in der Regel um vergleichsweise verdünnte Lösungen, die nicht ohne Weiteres einer Wiederverwertung zugeführt werden können, da viele chemische Prozesse den Einsatz von hochkonzentrierten Halogenwasserstofflösungen oder gar von Halogenwasserstoffgas erfordern. Außerdem sind die Transportkosten für solche verdünnte Lösungen im Vergleich zu denen für konzentriertere Lösungen verhältnismäßig hoch, weil bezogen auf die Stoffmenge an Halogenwasserstoff große Volumina verdünnter Halogenwasserstofflösung transportiert werden müssen. Daher besteht ein Bedarf, verdünnte wässrige Halogenwasserstofflösungen zu konzentrieren, wie beispielsweise durch die Abtrennung von gasförmigem Halogenwasserstoff aus verdünnten wässrigen Halogenwasserstofflösungen .

Konzentrierte wässrige Halogenwasserstofflösungen können durch Destillation verdünnter wässriger Halogenwasserstofflösungen erhalten werden. Da wässrige Halogenwasserstofflösungen und insbesondere Salzsäure azeotrope Mischungen sind, ist der durch einfache Destillation erreichbare maximale Halogenwasserstoffgehalt jedoch durch das Azeotrop der Mischung aus dem Halogenwasserstoff und Wasser begrenzt. Aufgrund dessen können die beiden Komponenten Halogenwasserstoff und Wasser aus einer verdünnten wässrigen Halogenwasserstofflösung durch einfache Destillation nicht vollständig voneinander getrennt, sondern der Halogenwasserstoffgehalt kann durch eine einfache Destillation nur bis zu der dem Azeotrop entsprechenden Konzentration erhöht werden. Beispielsweise kann verdünnte Salzsäure durch einfaches Destillieren bei Atmosphärendruck lediglich auf einen Maximalgehalt an Chlorwasserstoff von ungefähr 20 Gew.-% konzentriert werden. Um höher konzentrierte Salzsäure, wie beispielsweise im Wesentlichen wasserfreies Chlorwasserstoffgas oder reines Chlorwasserstoffgas zu erzeugen, muss daher ein anderes Verfahren eingesetzt werden, wie beispielsweise eine extraktive Destillation.

Bei der extraktiven Destillation wird der verdünnten wässrigen Halogenwasserstoffausgangslösung, wie z.B. einer verdünnten Salzsäure, ein geeignetes Extraktionsmittel zugesetzt, welches selektiv die Flüchtigkeit einer der Komponenten der wässrigen Halogenwasserstoffausgangslösung erhöht, also mit anderen Worten den Trennfaktor verändert. Außerdem bildet das Extraktionsmittel vorzugsweise mit keiner der zu trennenden Komponenten ein Azeotrop und weist einen niedrigeren Dampfdruck als die zu trennenden Komponenten auf. Auf diese Weise wird erreicht, dass das Extraktionsmittel am Sumpf der Kolonne anfällt und nicht den am Kopf anfallenden Halogenwasserstoff verunreinigt. Mithin kann durch die Zugabe eines Extraktionsmittels die Konzentrierung wässriger Halogenwasserstofflösungen bis hin zu einer Desorption von Halogenwasserstoffgas erreicht werden.

Als Extraktionsmittel für die extraktive Destillation wässriger Halogenwasserstoffausgangslösungen werden üblicherweise hygroskopische Verbindungen, wie insbesondere Schwefelsäure oder Salze, wie Alkalimetallchloride, Erdalkalimetallchloride oder ähnliche, eingesetzt.

Bei der technischen Realisierung wird die extraktive Destillation üblicherweise als extraktive Rektifikation durchgeführt, d.h. in einer Destillationskolonne wird die Extraktionsmittel enthaltende verdünnte Halogenwasserstofflösung von oben nach unten, also im Gegenstrom zu dem von unten aufsteigendem Dampf, welcher am Sumpf der Destillationskolonne durch Verdampfen erzeugt wird, geführt. Dabei nimmt die das Extraktionsmittel enthaltende wässrige Lösung aufgrund der hygroskopischen Eigenschaften des Extraktionsmittels Wasser aus der Dampfphase auf, während zugleich Halogenwasserstoffgas aus der wässrigen Lösung in die Dampfphase ausgetrieben wird und so die Dampfphase in Bezug auf den Halogenwasserstoff konzentriert wird. Aus diesem Grund wird im oberen Abschnitt bzw. an dem Kopf der Destillationskolonne, je nach Verfahrensführung, ein Halogenwasserstoffdampf (also eine Mischung aus Halogenwasserstoffgas und Wasser) oder reines Halogenwasserstoffgas erhalten, welcher bzw. welches aus dem Kopf der Destillationskolonne abgezogen wird und dann im Fall eines Halogenwasserstoffdampfes üblicherweise zu einer konzentrierten wässrigen Halogenwasserstofflösung kondensiert wird, welche eine höhere Konzentration als die eingesetzte verdünnte wässrige Halogenwasserstoffausgangslösung aufweist, oder im Fall eines nur noch geringe Mengen Wasser enthaltendes Halogenwasserstoffgases üblicherweise durch ein oder mehrere Kondensationsschritte getrocknet wird.

Hingegen nimmt die Konzentration des Extraktionsmittels in der während der extraktiven Destillation von oben nach unten herabströmenden, das Extraktionsmittel enthaltende Lösung aufgrund der Absorption von Wasser aus der im Gegenstrom geführten Dampfphase ab, so dass die in dem unteren Abschnitt bzw. am Sumpf der Destillationskolonne abgezogene Lösung eine niedrigere Extraktionsmittelkonzentration aufweist als die am oberen Ende der Destillationskolonne eingesetzte Extraktionsmittel enthaltende Lösung. Um die das Extraktionsmittel enthaltende Lösung wiederverwenden bzw. im Kreislauf führen zu können, muss diese nach der Abführung aus dem Sumpf der Destillationskolonne daher bezüglich des Extraktionsmittels konzentriert werden. In der Praxis geschieht dies üblicherweise so, dass die aus dem Sumpf der Destillationskolonne abgezogene verdünnte Lösung in einer der Destillationskolone nachgeschalteten Verdampfungseinrichtung durch Verdampfen von Wasser konzentriert wird, bevor die so konzentrierte Extraktionsmittel enthaltende Lösung in die Destillationseinrichtung zurückgeführt wird.

Dabei wird das Konzentrieren der Extraktionsmittel enthaltenden Lösung in der Verdampfungseinrichtung aus energetischen Gründen üblicherweise mehrstufig, d.h. in mehreren hintereinandergeschalteten Verdampfungsstufen, durchgeführt. Aufgrund der durch das in der zu konzentrierenden Lösung enthaltene Extraktionsmittel eintretenden Siedepunktserhöhung der Lösung wird die Verdampfung der Lösung typischerweise bei Atmosphärendruck oder bei subatmosphärischem Druck vorgenommen, um den bei dem vorliegenden Druck vorliegenden Siedepunkt möglichst niedrig und so das zur Verdampfung von Wasser benötige Energieniveau möglichst niedrig zu halten. Da sich die Konzentration des Extraktionsmittels in der mehrstufigen Verdampfungseinrichtung von Stufe zu Stufe erhöht und mithin der Siedepunkt der Lösung bei einem vorgegebenen Druck von Stufe zu Stufe zunimmt, wird aus den vorstehend genannten Gründen üblicherweise der Druck von jeder der Verdampfungsstufen zu der jeweils nachfolgenden Verdampfungsstufe verringert, d.h. jeder Verdampfungsschritt wird bei einem niedrigeren Druck durchgeführt als der jeweils vorherige Verdampfungsschritt. Dadurch kann der Brüden einer vorherigen Stufe energetisch zur Erwärmung der nächsten Stufe, die bei niedrigerem Druck betrieben wird, verwertet werden. Ein Nachteil einer derartigen mehrstufigen Verfahrensführung besteht jedoch darin, dass die Verdampfungseinrichtung aufgrund mehrerer Verdampfungsstufen apparativ sehr komplex ist, was nicht nur - unter anderem auch durch die notwendige Auskleidung der einzelnen Verdampfungsstufen mit teuren Auskleidungsmaterialien, damit die Verdampfungseinrichtung korrosiven Angriffen der aufzuarbeitenden Lösungen standhält - hohe Investitionskosten für die Verdampfungseinrichtung bedingt, sondern insbesondere auch hohe Betriebs- und Wartungskosten mit sich führt und zudem technisch aufwendige Maßnahmen zur Erzeugung und Aufrechterhaltung von Unterdruck bzw. Vakuum bedingt. Des Weiteren sind bei einer derartigen mehrstufigen Verdampfungseinrichtung aufwendige Einrichtungen für eine zuverlässige Regelung und Steuerung der Betriebsbedingungen, wie insbesondere dem Druck und der Temperatur der einzelnen Verdampfungsstufen, erforderlich. Alles in allem weist eine derartige Verdampfungseinrichtung daher eine hohe apparative Komplexität und somit auch eine hohe potentielle Störanfälligkeit auf und deren Betrieb ist mit hohen Betriebskosten verbunden. Folglich besteht ein Bedarf dafür, die Komplexität der zum Konzentrieren der Extraktionsmittel enthaltenden Lösung erforderlichen Verdampfungseinrichtung zu verringern.

Ein weiterer Nachteil einer mehrstufigen Verdampfungseinrichtung liegt bei der Verwendung von Salz als Extraktionsmittel darin, dass insbesondere in den letzten Verdampfungsstufen die Gefahr einer unerwünschten Kristallisation von Extraktionsmittel besteht. Wie vorstehend dargelegt, wird üblicherweise der Druck von jeder der Verdampfungsstufen zu der jeweils nachfolgenden Verdampfungsstufe verringert, und zwar typischerweise derart, dass die Siedetemperatur der Lösung bei dem jeweils herrschenden Druck von Verdampfungsstufe zu Verdampfungsstufe abnimmt. Aus diesem Grund besteht insbesondere in den letzten Verdampfungsstufen die Gefahr einer unerwünschten Kristallisation von Extraktionsmittel, welche zu einer Blockierung der Verdampfungseinrichtung und dieser nachgeschalteter verfahrenstechnischer Einrichtungen führen und somit zu einem kompletten Anlagenausfall führen kann. Zudem muss das kristallisierte Extraktionsmittel aufwendig entfernt werden, was einen hohen technischen und personellen Aufwand erfordert sowie Stillstandzeiten der Anlage bedingt.

Daher liegt der vorliegenden Erfindung die Aufgabe zugrunde, ein Verfahren zum Konzentrieren einer wässrigen Halogenwasserstoffausgangslösung auf Basis von extraktiver Destillation bereitzustellen, das energieeffizient ist und gleichzeitig in einer apparativ vergleichsweise einfachen und kostengünstigen Anlage durchgeführt werden kann, und bei dem auch bei Einsatz von Salz als Extraktionsmittel eine Kristallisation von Extraktionsmittel zuverlässig vermieden wird.

Erfindungsgemäß wird diese Aufgabe durch ein Verfahren zum Konzentrieren einer wässrigen Halogenwasserstoffausgangslösung, insbesondere von Salzsäure, gelöst, welches die nachfolgenden Schritte umfasst:
extraktives Destillieren der wässrigen Halogenwasserstoffausgangslösung in Gegenwart eines Extraktionsmittels in einer Destillationseinrichtung,
Abziehen von Halogenwasserstoffdampf und/oder von Halogenwasserstoffgas aus dem oberen Abschnitt der Destillationseinrichtung,
Abziehen einer Extraktionsmittel enthaltenden Lösung aus dem unteren Abschnitt der Destillationseinrichtung,
- Konzentrieren der aus dem unteren Abschnitt der Destillationseinrichtung abgezogenen Extraktionsmittel enthaltenden Lösung in einer Verdampfungseinrichtung und
- Zurückführen der in der Verdampfungseinrichtung konzentrierten Extraktionsmittel enthaltenden Lösung in die Destillationseinrichtung,
wobei die aus dem unteren Abschnitt der Destillationseinrichtung abgezogene Extraktionsmittel enthaltende Lösung in der Verdampfungseinrichtung bei einem über dem atmosphärischen Druck liegenden Druck durch Verdampfung konzentriert wird und dass das Konzentrieren der Extraktionsmittel enthaltenden Lösung in der Verdampfungseinrichtung bei einem höheren Druck als das extraktive Destillieren in der Destillationseinrichtung durchgeführt wird.

Diese Lösung basiert auf der Erkenntnis, dass ein Verfahren zum Konzentrieren einer wässrigen Halogenwasserstofflösung durch extraktive Destillation der wässrigen Halogenwasserstoffausgangslösung in der Gegenwart eines Extraktionsmittels in einer Destillationseinrichtung nicht nur energieeffizient ist, sondern insbesondere auch in einer apparativ sehr einfachen und kostengünstigen Anlage durchgeführt werden kann, nämlich in einer Anlage mit einer einstufig ausgebildeten Verdampfungsstufe zur Konzentration der im Kreislauf geführten Extraktionsmittel enthaltenden Lösung, wenn die aus dem unteren Abschnitt der Destillationseinrichtung abgezogene Extraktionsmittel enthaltende Lösung in einer Verdampfungseinrichtung konzentriert wird, welche bei einem über dem atmosphärischen Druck liegenden Druck betrieben wird. Aufgrund der Möglichkeit der Durchführung eines solchen Verfahrens mit einer einstufigen Verdampfungseinrichtung zum Konzentrieren der Extraktionsmittel enthaltenden Lösung, ist die zum Betreiben des erfindungsgemäßen Verfahrens notwendige Anlage apparativ einfacher und aufgrund dessen beträchtlich kostengünstiger als die aus dem Stand der Technik bekannten Anlagen, welche mehrere hintereinandergeschaltete Verdampfungsstufen umfassen, deren Bauteile jeweils zum Schutz vor korrosivem Angriff der zu konzentrierenden Lösung mit teuren Auskleidungsmaterialien auszustatten sind. Zudem sind aufgrund dessen auch die Betriebs- und Wartungskosten der zur Durchführung des erfindungsgemäßen Verfahrens notwendigen Anlage im Vergleich zu den aus dem Stand der Technik bekannten Verfahren signifikant geringer. Ferner erfordert das erfindungsgemäße Verfahren für dessen Durchführung aus diesen Gründen auch eine einfachere und weniger komplexe Steuerung bzw. Regelung als die aus dem Stand der Technik bekannten Verfahren. Insbesondere sind zur Durchführung des erfindungsgemäßen Verfahrens keine Einrichtungen zur Erzeugung, Aufrechterhaltung sowie Regelung und Steuerung eines Unterdrucks bzw. Vakuums in der Verdampfungseinrichtung zur Konzentrierung der Extraktionsmittel enthaltenden Lösung erforderlich.

Ein weiterer Vorteil des erfindungsgemäßen Verfahrens liegt darin, dass bei diesem eine Kristallisation von Extraktionsmittel auch bei Einsatz von Salz als Extraktionsmittel bei der Konzentrierung der Lösung in der Verdampfungseinrichtung zuverlässig verhindert wird. Dies deshalb, weil die Konzentrierung der Extraktionsmittel enthaltenden Lösung in der Verdampfungseinrichtung bei einem über dem atmosphärischen Druck liegenden Druck erfolgt, so dass folglich die höchste Konzentration des Extraktionsmittels bei einer - aufgrund des erhöhten Drucks im Vergleich zu den aus dem Stand der Technik bekannten und bei niedrigerem Druck durchgeführten Verfahren - vergleichsweise hohen Verdampfungstemperatur erreicht wird, weswegen die Kristallisationsgefahr verhindert oder zumindest beträchtlich gesenkt wird, weil die Löslichkeit der oben genannten Salze in wässriger oder wässrig saurer Lösung mit ansteigender Temperatur ebenfalls zunimmt. Mithin kann aufgrund der vergleichsweise hohen Löslichkeit der Salze bei der hohen Verdampfungstemperatur die Extraktionsmittel enthaltende Lösung ohne Kristallisationsgefahr bis hin zu hohen Salzgehalten konzentriert werden.

Ein weiterer wesentlicher Vorteil des erfindungsgemäßen Verfahrens liegt darin, dass bei dem Konzentrieren der im Kreislauf geführten, Extraktionsmittel enthaltenden Lösung in der Verdampfungseinrichtung aufgrund des bei der Verdampfung herrschenden erhöhten Drucks neben der konzentrierten Extraktionsmittel enthaltenden Lösung Wasserdampf bzw. Brüden entsteht, der einen entsprechend hohen Druck und eine entsprechend hohe Temperatur und somit einen hohen nutzbaren Energieinhalt aufweist. Aufgrund des vergleichsweise hohen Drucks und der vergleichsweise hohen Temperatur des Brüdens kann dieser dazu verwendet werden, die notwendige Energie für die Erzeugung von Dampf im unteren Bereich der Destillationseinrichtung zu liefern. Dies kann beispielsweise dadurch erfolgen, dass ein Teilstrom der am Sumpf der Destillationseinrichtung anfallenden Lösung in einem Wärmeaustauscher mit dem in der Verdampfungseinrichtung zur Konzentration der Extraktionsmittel enthaltenden Lösung anfallenden Brüden direkt oder besonders bevorzugt indirekt in Kontakt gebracht wird, wobei der Brüden kondensiert und aufgrund der dadurch übertragenen Wärme die Lösung verdampft, welche dann als Dampf in den unteren Bereich der Destillationseinrichtung zurückgeführt wird.

Bei dem erfindungsgemäßen Verfahren zum Konzentrieren einer wässrigen Halogenwasserstoffausgangslösung können selbstverständlich nicht nur aus Wasser und Säure bestehende Ausgangslösungen eingesetzt werden, sondern insbesondere auch wässrige Halogenwasserstofflösungen, welche zusätzlich mit ein oder mehreren anderen gelösten Stoffen und/oder suspendiert vorliegenden Feststoffen beladen sind.

Erfindungsgemäß wird die aus dem unteren Abschnitt der Destillationseinrichtung abgezogene, Extraktionsmittel enthaltende Lösung in der Verdampfungseinrichtung bei einem über dem atmosphärischen Druck liegenden Druck durch Verdampfung konzentriert. Um eine besonders effiziente und optimale Nutzung des bei der Konzentrierung der Extraktionsmittel enthaltenden Lösung in der Verdampfungseinrichtung anfallenden Brüdens zu ermöglichen, wird das Konzentrieren der Extraktionsmittel enthaltenden Lösung in der Verdampfungseinrichtung bei einem höheren Druck als das extraktive Destillieren in der Destillationseinrichtung durchgeführt. In diesem Fall kann der in der Verdampfungseinrichtung anfallende Brüden besonders wirksam dazu verwendet werden, um die notwendige Energie für die Erzeugung von Dampf in dem unteren Bereich der Destillationseinrichtung zu liefern.

Gute Ergebnisse sowohl im Hinblick auf die Energieeffizienz des erfindungsgemäßen Verfahrens als auch im Hinblick auf die apparative Einfachheit der zum Betrieb des erfindungsgemäßen Verfahrens notwendigen Anlage, die zuverlässige Vermeidung von Kristallisation bei der Konzentrierung der Extraktionsmittel enthaltende Lösung selbst im Fall der Verwendung von Salz als Extraktionsmittel sowie die Verwertbarkeit des in der Verdampfungseinrichtung entstehenden Brüdens werden insbesondere erhalten, wenn das Konzentrieren der Extraktionsmittel enthaltenden Lösung in der Verdampfungseinrichtung bei einem absoluten Druck von mehr als dem in dem meteorologischen Mittel vorliegenden Normaldruck, welcher bei Meereshöhe 0,101325 MPa beträgt, bis 1,5 MPa, bevorzugt von 0,15 bis 1 MPa, besonders bevorzugt von 0,2 bis 0,5 MPa, ganz besonders bevorzugt von 0,25 bis 0,4 MPa und höchst bevorzugt von 0,3 bis 0,35 MPa durchgeführt wird.

Unter dem absoluten Druck in der Verdampfungseinrichtung wird im Sinne der vorliegenden Erfindung der in der Verdampfungseinrichtung bei der Verdampfung herrschende Druck, unter dem die zu konzentrierende Extraktionsmittel enthaltende Lösung steht, welcher gleich dem Verdampfungsdruck bzw. dem Druck des entstehenden Brüdens ist, verstanden. In dem Fall, dass dieser Druck an verschiedenen Stellen in der Verdampfungseinrichtung variieren sollte, d.h. nicht überall in der Verdampfungseinrichtung konstant ist, wird darunter der durchschnittliche Druck verstanden, unter dem die zu konzentrierende Extraktionsmittel enthaltende Lösung steht, welcher gleich dem Druck des in der Verdampfungseinrichtung entstehenden Brüdens ist, wobei in diesem Fall der Druck erfindungsgemäß an jeder Stelle der Verdampfungseinrichtung, an der sich Extraktionsmittel enthaltende Lösung befindet, mehr als der in dem meteorologischen Mittel vorliegende Normaldruck beträgt, welcher bei Meereshöhe 0,101325 MPa beträgt. Sofern die Verdampfungseinrichtung mehrstufig ausgebildet ist, was gemäß der vorliegenden Erfindung nicht bevorzugt ist, wird darunter der durchschnittliche Druck verstanden, unter dem die zu konzentrierende Extraktionsmittel enthaltende Lösung steht, welcher gleich dem Druck der durch Zusammenführen der in den einzelnen Stufen entstehenden Brüden entstehenden Gasmischung ist, wobei in diesem Fall der Druck erfindungsgemäß an jeder Stelle der Verdampfungseinrichtung, an der sich Extraktionsmittel enthaltende Lösung befindet, mehr als der in dem meteorologischen Mittel vorliegende Normaldruck, welcher bei Meereshöhe 0,101325 MPa beträgt, beträgt.

Die bei dem Betrieb der Verdampfungseinrichtung zur Konzentration der Extraktionsmittel enthaltenden Lösung herrschende Temperatur entspricht der Siedetemperatur bzw. Verdampfungstemperatur der Lösung, d.h. derjenigen Temperatur, bei welcher unter dem in der Verdampfungseinrichtung herrschenden Druck Wasser aus der Lösung verdampft. Aus diesem Grund ist die Temperatur bei der Konzentration der Extraktionsmittel enthaltenden Lösung in der Verdampfungseinrichtung mit dem in der Verdampfungseinrichtung eingestellten Druck korreliert und von der Art des Extraktionsmittels abhängig. Im Einklang mit den vorstehend angegebenen bevorzugten Druckbereichen in der Verdampfungseinrichtung wird das Konzentrieren der Extraktionsmittel enthaltenden Lösung in der Verdampfungseinrichtung demnach vorzugsweise bei einer Temperatur von 80 bis 300°C durchgeführt, wobei besonders gute Ergebnisse erhalten werden, wenn das Konzentrieren der Extraktionsmittel enthaltenden Lösung in der Verdampfungseinrichtung bei einer Temperatur von 100 bis 260°C, besonders bevorzugt von 120 bis 220°C, ganz besonders bevorzugt von 140 bis 200°C und höchst bevorzugt von 160 bis 180°C durchgeführt wird.

Grundsätzlich ist die vorliegende Erfindung bezüglich der Art der eingesetzten Verdampfungseinrichtung nicht beschränkt, so dass zur Konzentration der Extraktionsmittel enthaltenden Lösung alle dem Fachmann bekannten Verdampfungseinrichtungen eingesetzt werden können. Gute Ergebnisse werden insbesondere erzielt, wenn das Konzentrieren der Extraktionsmittel enthaltenden Lösung in einer Verdampfungseinrichtung durchgeführt wird, welche wenigstens einen Verdampfer umfasst, der aus der Gruppe ausgewählt wird, welche aus Naturumlaufverdampfern, Zwangsumlaufverdampfern, Kettle-Verdampfern, Fallfilmverdampfern und beliebigen Kombinationen der vorstehenden Verdampfer besteht. Vorzugsweise besteht die Verdampfungseinrichtung, in welcher das Konzentrieren der Extraktionsmittel enthaltenden Lösung durchgeführt wird, aus einem Verdampfer ausgewählt aus der Gruppe bestehend aus Zwangsumlaufverdampfern, Kettle-Verdampfern, Fallfilmverdampfern und beliebigen Kombinationen der vorstehenden Verdampfer. Sofern die Verdampfungseinrichtung einen Zwangsumlaufverdampfer umfasst, kann diesem auch ein Flashverdampfer nachgeschaltet sein.

Obwohl es im Rahmen der vorliegenden Erfindung grundsätzlich möglich ist, dass die Verdampfungseinrichtung zur Konzentration der Extraktionsmittel enthaltenden Lösung mehrstufig ausgebildet ist, ist es gemäß einer ganz besonders bevorzugten Ausführungsform der vorliegenden Erfindung vorgesehen, dass das Konzentrieren der Extraktionsmittel enthaltenden Lösung in einer Verdampfungseinrichtung durchgeführt wird, welche einstufig ausgebildet ist. Dadurch werden die erfindungsgemäßen Effekte, nämlich apparative Einfachheit der zur Durchführung des Verfahrens benötigten Anlage, Energieeffizienz, zuverlässige Verhinderung von Kristallisation von Extraktionsmittel bei der Konzentration in der Verdampfungseinrichtung und Möglichkeit der Nutzung des in der Verdampfungseinrichtung entstehenden Brüdens zur Herstellung des zum Betrieb der Destillationseinrichtung notwendigen Dampfes in besonders hohem Ausmaß erreicht. Unter einstufiger Verdampfungseinrichtung wird im Sinne der vorliegenden Erfindung verstanden, dass die Verdampfungseinrichtung lediglich einen Verdampfer umfasst.

In einer dazu alternativen, wenn auch weniger bevorzugten, Ausführungsform der vorliegenden Erfindung ist die Verdampfungseinrichtung mehrstufig ausgebildet.

Um die Verdampfungseinrichtung vor einem korrosiven Angriff der Extraktionsmittel enthaltenden Lösung zu schützen, wird es in Weiterbildung des Erfindungsgedankens vorgeschlagen, dass das Konzentrieren der Extraktionsmittel enthaltenden Lösung in einer Verdampfungseinrichtung durchgeführt wird, deren Innenfläche zumindest abschnittsweise aus einem Material besteht oder mit einem Material ausgekleidet ist, welches aus der Gruppe bestehend aus Graphit, Siliciumcarbid, kohlenstofffaserhaltigen Verbundwerkstoffen, fluorierten Polymeren, Emaille, Glas, gummierten Stählen und beliebigen Kombinationen von zwei oder mehr der vorstehenden Materialien ausgewählt wird. Um den vorstehenden Effekt vollständig zu erreichen, ist es bevorzugt, alle Innenflächen der Verdampfungseinrichtung, welche mit der Extraktionsmittel enthaltenden Lösung in Kontakt kommen, vollständig mit einem der vorstehend genannten Materialien auszukleiden.

Gute Ergebnisse werden bei dieser Ausführungsform insbesondere erhalten, wenn das Material der Auskleidung aus der Gruppe bestehend aus Graphit, Siliciumcarbid, Polytetrafluorethylen und beliebigen Kombinationen von zwei oder mehr der vorstehenden Materialien ausgewählt wird. Sofern Graphit eingesetzt wird, was bevorzugt ist, wird bevorzugt mit Harz, wie beispielsweise Phenolharz, imprägnierter Graphit eingesetzt. Zudem ist auch Polytetrafluorethylen, welches kostengünstig ist und als Beschichtung oder als lose Folie auf die Innenfläche(n) aufgebracht und bis etwa 270°C eingesetzt werden kann, bevorzugt. Hingegen ist Siliciumcarbid vergleichsweise teuer und daher nur bei vergleichsweise hohen Temperaturen von beispielsweise mehr als 270°C bevorzugt.

Erfindungsgemäß wird eine Extraktionsmittel enthaltende Lösung bei dem erfindungsgemäßen Verfahren zwischen der Destillationseinrichtung und der Verdampfungseinrichtung im Kreislauf geführt. Dabei kann die zu konzentrierende wässrige Halogenwasserstoffausgangslösung der im Kreislauf geführten Extraktionsmittel enthaltenden Lösung vor deren Zuführung in die Destillationseinrichtung zugemischt werden und dann diese Mischung in die Destillationseinrichtung und bevorzugt in den mittleren oder oberen Abschnitt der Destillationseinrichtung eingeführt werden. Alternativ dazu ist es auch möglich, die zu konzentrierende wässrige Halogenwasserstoffausgangslösung der Destillationseinrichtung und bevorzugt dem mittleren oder oberen Abschnitt der Destillationseinrichtung getrennt von der im Kreislauf geführten Extraktionsmittel enthaltenden Lösung, welche ebenfalls bevorzugt in den mittleren oder oberen Abschnitt der Destillationseinrichtung eingeführt wird, zuzuführen. Die Einfuhr in den mittleren oder oberen Abschnitt der Destillationseinrichtung erfolgt, um das Extraktionsmittel und die zu konzentrierende wässrige Extraktionsmittel enthaltenden Lösung im Gegenstrom zu dem von unten nach oben aufsteigenden Halogenwasserstoffdampf zu führen.

Ein weiterer Vorteil des erfindungsgemäßen Verfahrens liegt darin, dass dieses bezüglich der Extraktionsmittelkonzentration der zu konzentrierenden, Extraktionsmittel enthaltenden Lösung vor und nach der Verdampfungseinrichtung nicht besonders beschränkt ist. Beispielsweise kann aus dem unteren Abschnitt der Destillationseinrichtung eine Extraktionsmittel enthaltende Lösung mit einer Konzentration an Extraktionsmittel in der Lösung von 30 bis 60 Gew.-%, bevorzugt von 35 bis 55 Gew.-% und besonders bevorzugt von 40 bis 50 Gew.-% abgezogen werden.

Ferner ist es bevorzugt, dass die Extraktionsmittel enthaltende Lösung in der Verdampfungseinrichtung bis zu einer Konzentration an Extraktionsmittel in der Lösung von 40 bis 80 Gew.-%, bevorzugt von 50 bis 70 Gew.-% und besonders bevorzugt von 55 bis 65 Gew.-%, konzentriert wird. Die vorstehend genannten Werte beziehen sich auf die Konzentration an Extraktionsmittel in der Lösung am Austritt der Verdampfungseinrichtung.

Grundsätzlich ist die vorliegende Erfindung bezüglich des eingesetzten Extraktionsmittels nicht beschränkt, solange dieses selektiv die Flüchtigkeit von Wasser oder Halogenwasserstoff in einer Wasser und Halogenwasserstoff enthaltenden Lösung erhöht und vorzugsweise mit keinem der zu trennenden Stoffe ein Azeotrop bildet. Ferner ist es bevorzugt, dass das Extraktionsmittel einen niedrigeren Dampfdruck als Wasser und der Halogenwasserstoff aufweist. Gute Ergebnisse werden insbesondere erhalten, wenn das Extraktionsmittel wenigstens eine Substanz enthält oder daraus besteht, welche aus der Gruppe ausgewählt wird, welche aus Schwefelsäure, Alkalimetallhalogeniden, Erdalkalimetallhalogeniden, Aluminiumhalogeniden, Ammoniumhalogeniden und beliebigen Kombinationen von zwei oder mehreren der vorstehend genannten Komponenten besteht.

Gemäß einer bevorzugten Ausführungsform der vorliegenden Erfindung wird als Extraktionsmittel eines eingesetzt, welches wenigstens eine Substanz enthält oder bevorzugt daraus besteht, welche aus der Gruppe ausgewählt wird, welche aus Schwefelsäure, Lithiumchlorid, Natriumchlorid, Kaliumchlorid, Magnesiumchlorid, Calciumchlorid, Aluminiumchlorid, Ammoniumchlorid Lithiumbromid, Natriumbromid, Kaliumbromid, Magnesiumbromid, Calciumbromid, Aluminiumbromid, Ammoniumbromid und beliebigen Kombinationen von zwei oder mehreren der vorstehend genannten Komponenten besteht. Die vorstehend genannten Bromidsalze sind als Extraktionsmittel insbesondere bevorzugt, wenn bei dem Verfahren Bromwasserstoffgas aus einer wässrigen Bromwasserstoffausgangslösung erzeugt wird.

Besonders bevorzugt enthält das Extraktionsmittel oder besteht das Extraktionsmittel aus wenigstens einer Substanz, welche aus der Gruppe ausgewählt wird, welche aus Schwefelsäure, Magnesiumchlorid, Calciumchlorid und beliebigen Kombinationen von zwei oder mehreren der vorstehend genannten Komponenten besteht.

In einer beispielhaften Ausführungsform der vorliegenden Erfindung wird als Extraktionsmittel Schwefelsäure eingesetzt, wobei aus dem unteren Abschnitt der Destillationseinrichtung eine Schwefelsäure enthaltende Lösung mit einer Konzentration an Schwefelsäure in der Lösung von 45 bis 60 Gew.-% und bevorzugt von 50 bis 55 Gew.-% abgezogen wird, diese Lösung in der Verdampfungseinrichtung bis zu einer Konzentration an Schwefelsäure in der Lösung von 50 bis 75 Gew.-% und bevorzugt von 55 bis 65 Gew.-% konzentriert wird und diese konzentrierte Lösung in die Destillationseinrichtung zurückgeführt wird.

In einer dazu alternativen Ausführungsform der vorliegenden Erfindung wird als Extraktionsmittel Magnesiumchlorid eingesetzt, wobei aus dem unteren Abschnitt der Destillationseinrichtung eine Magnesiumchlorid enthaltende Lösung mit einer Konzentration an Magnesiumchlorid in der Lösung von 25 bis 40 Gew.-% und bevorzugt von 30 bis 35 Gew.-% abgezogen wird, diese Lösung in der Verdampfungseinrichtung bis zu einer Konzentration an Magnesiumchlorid in der Lösung von 30 bis 50 Gew.-% und bevorzugt von 35 bis 45 Gew.-% konzentriert wird und diese konzentrierte Lösung in die Destillationseinrichtung zurückgeführt wird.

In einer dazu alternativen Ausführungsform der vorliegenden Erfindung wird als Extraktionsmittel Calciumchlorid eingesetzt, wobei aus dem unteren Abschnitt der Destillationseinrichtung eine Calciumchlorid enthaltende Lösung mit einer Konzentration an Calciumchlorid in der Lösung von 35 bis 50 Gew.-% und bevorzugt von 40 bis 45 Gew.-% abgezogen wird, diese Lösung in der Verdampfungseinrichtung bis zu einer Konzentration an Calciumchlorid in der Lösung von 40 bis 65 Gew.-% und bevorzugt von 45 bis 55 Gew.-% konzentriert wird und diese konzentrierte Lösung in die Destillationseinrichtung zurückgeführt wird.

Vorzugsweise wird die konzentrierte, Extraktionsmittel enthaltende Lösung nach dem Austritt aus der Verdampfungseinrichtung in den oberen und/oder mittleren Abschnitt der Destillationseinrichtung zurückgeführt.

Gemäß einer weiteren ganz besonders bevorzugten Ausführungsform der vorliegenden Erfindung wird der in der Verdampfungseinrichtung bei der Konzentrierung der Extraktionsmittel enthaltenden Lösung durch Verdampfung gebildete Brüden zum Beheizen der Destillationseinrichtung verwendet. Dies kann, auch wenn dies weniger bevorzugt ist, durch direkte Beheizung erfolgen, nämlich indem beispielsweise der Brüden als Heizgas in den unteren Abschnitt der Destillationseinrichtung eingeführt wird, oder bevorzugt durch indirekte Beheizung erfolgen, nämlich indem der Brüden in einem Wärmeaustauscher Sumpfprodukt der Destillationseinrichtung beheizt.

Die letztgenannte Variante wird vorzugsweise durchgeführt, indem der in der Verdampfungseinrichtung gebildete Brüden aus der Verdampfungseinrichtung abgezogen und in einen Wärmeaustauscher geführt sowie darin kondensiert wird und dem Wärmeaustauscher ebenfalls aus dem unteren Abschnitt der Destillationseinrichtung abgezogene Extraktionsmittel enthaltende Lösung zugeführt wird, wobei die dem Wärmeaustauscher zugeführte Extraktionsmittel enthaltenden Lösung durch die freigesetzte Kondensationswärme zumindest teilweise verdampft wird und dieser Dampf in den unteren Abschnitt der Destillationseinrichtung zurückgeführt wird.

Bei der vorstehenden Ausführungsform wird der Brüden nach dem Austritt aus der Verdampfungseinrichtung bis zum Beheizen unter dem Druck gehalten, welchen der Brüden bei dessen Bildung durch Verdampfung in der Verdampfungseinrichtung aufweist, d.h. bei dem Druck des Brüdens am Austritt der Verdampfungseinrichtung. Dadurch wird eine besonders hohe Ausnutzung der in dem Brüden enthaltenen Energie sowie insbesondere ein effizienter Wärmeübergang in einem vergleichsweise kleinen Wärmeaustauscher erreicht. Allerdings kann alternativ dazu auch eine Drossel vorgesehen sein, um den Brüden zu entspannen.

In Weiterbildung des Erfindungsgedankens wird es vorgeschlagen, einen Teilstrom oder den gesamten Strom des in dem Wärmeaustauscher kondensierten Brüdens mit dem aus der Verdampfungseinrichtung abgezogenen Brüden vor dessen Einleitung in den Wärmeaustauscher in Kontakt zu bringen, um aus dem aus der Verdampfungseinrichtung abgezogenen Brüden vor dessen Einleitung in den Wärmeaustauscher gesättigten Dampf zu bilden.

Anstelle von oder zusätzlich zu der Brüdenverwertung kann stromabwärts der Destillationseinrichtung ein Verdampfer vorgesehen sein, welcher mit Frischdampf beheizt wird, um zumindest einen Teil des für den Betrieb der Destillationseinrichtung notwendigen Dampfes zu erzeugen.

Grundsätzlich ist die vorliegende Erfindung bezüglich des Drucks, bei welchem die extraktive Destillation durchgeführt wird, nicht besonders beschränkt. Wie vorstehend dargelegt, wird das Konzentrieren der Extraktionsmittel enthaltenden Lösung in der Verdampfungseinrichtung bei einem höheren Druck als das extraktive Destillieren in der Destillationseinrichtung durchgeführt. Daher ist es bevorzugt, die extraktive Destillation bei Atmosphärendruck oder subatmosphärischen Druck durchzuführen und insbesondere bei einem absoluten Druck von 0,01 bis 0,12 MPa und bevorzugt von 0,05 bis 0,12 MPa, was insbesondere praktikabel ist, wenn mit dem Verfahren konzentrierte wässrige Halogenwasserstofflösung, insbesondere konzentrierte wässrige Salzsäurelösung, hergestellt werden soll. Wenn hingegen Halogenwasserstoffgas, insbesondere Chlorwasserstoffgas, hergestellt werden soll, ist es bevorzugt, die extraktive Destillation bei überatmosphärischem Druck durchzuführen und insbesondere bei einem absoluten Druck von 0,10 bis 0,30 MPa und bevorzugt von 0,10 bis 0,15 MPa.

Vorzugsweise wird die extraktive Destillation so durchgeführt, dass die Temperatur in dem unteren Abschnitt der Destillationseinrichtung, also bei stationären Betriebsbedingungen, 50 bis 200°C und bevorzugt von 90 bis 140°C beträgt.

Zudem ist es bevorzugt, die extraktive Destillation so durchzuführen, dass die Temperatur in dem oberen Abschnitt der Destillationseinrichtung, also bei stationären Betriebsbedingungen, 30 bis 190°C und bevorzugt von 70 bis 130°C beträgt.

Als Destillationseinrichtung kommen dabei alle dem Fachmann für diesen Zweck bekannten Einrichtungen in Frage, wie insbesondere Destillationskolonnen, Destillationssäulen und Destillationstürme.

Prinzipiell ist die vorliegende Erfindung bezüglich des Halogenwasserstoffgehalts der Halogenwasserstoffausgangslösung nicht besonders beschränkt. Insbesondere können Halogenwasserstoffausgangslösungen mit einem Halogenwasserstoffgehalt von 1 bis weniger als 35 Gew.-% und bevorzugt von 10 bis 15 Gew.-% eingesetzt werden.

Auch bezüglich der Konzentration des Halogenwasserstoffgehalts des aus dem oberen Abschnitt der Destillationseinrichtung abgezogenen Halogenwasserstoffdampfes und/oder des aus dem oberen Abschnitt der Destillationseinrichtung abgezogenen Halogenwasserstoffgases ist die vorliegende Erfindung nicht besonders beschränkt und bevorzugte Halogenwasserstoffgehalte betragen beispielsweise wenigstens 30 Gew.-% und bevorzugt von 34 bis 38 Gew.-% im Fall von Halogenwasserstoffdampf und mehr als 97 Gew.-%, bevorzugt wenigstens 98 Gew.-% und besonders bevorzugt wenigstens 99 Gew.-% im Fall von Halogenwasserstoffgas. Als Halogenwasserstoffdampf bzw. -gas kommt dabei insbesondere Chlorwasserstoffdampf, Chlorwasserstoffgas, Bromwasserstoffdampf und Bromwasserstoffgas in Betracht.

In Weiterbildung des Erfindungsgedankens wird es vorgeschlagen, den aus dem oberen Abschnitt der Destillationseinrichtung abgezogenen Halogenwasserstoffdampf und/oder das aus dem oberen Abschnitt der Destillationseinrichtung abgezogene Halogenwasserstoffgas zu entwässern bzw. zu trocknen, was vorzugsweise durch Kondensation erfolgt. Dabei kann die Entwässerung und insbesondere Kondensation ein- oder mehrstufig erfolgen. Dadurch wird der Halogenwasserstoffgehalt des Produkts entsprechend erhöht und zwar beispielsweise auf 32 bis 40 Gew.-% und bevorzugt 35 bis 40 Gew.-%, wie beispielsweise etwa 36 Gew.-%, im Fall einer konzentrierten wässrigen Halogenwasserstofflösung bzw. mehr als 99 Gew.-%, bevorzugt wenigstens 99,5 Gew.-% und besonders bevorzugt wenigstens 99,9 Gew.-% im Fall von Halogenwasserstoffgas, wie bevorzugt Chlorwasserstoffgas.

Ein weiterer Gegenstand der vorliegenden Erfindung ist eine Anlage zum Konzentrieren einer wässrigen Halogenwasserstoffausgangslösung, insbesondere von Salzsäure, umfassend:
- eine Destillationseinrichtung zum extraktiven Destillieren der wässrigen Halogenwasserstoffausgangslösung in der Gegenwart eines Extraktionsmittels,
- wenigstens eine Abzugsleitung an dem oberen Abschnitt der Destillationseinrichtung zum Abziehen von konzentriertem Halogenwasserstoffdampf und/oder von Halogenwasserstoffgas aus dem oberen Abschnitt der Destillationseinrichtung,
- wenigstens eine Abzugsleitung an dem unteren Abschnitt der Destillationseinrichtung zum Abziehen einer Extraktionsmittel enthaltenden Lösung aus dem unteren Abschnitt der Destillationseinrichtung,
- eine Verdampfungseinrichtung zum Konzentrieren der aus dem unteren Abschnitt der Destillationseinrichtung abgezogenen Extraktionsmittel enthaltenden Lösung und
- eine Rückfuhrleitung zur Rückführung von aus der Verdampfungseinrichtung abgezogener konzentrierter Extraktionsmittel enthaltenden Lösung in die Destillationseinrichtung,
wobei die Verdampfungseinrichtung so ausgestaltet ist, dass die aus dem unteren Abschnitt der Destillationseinrichtung abgezogene Extraktionsmittel enthaltende Lösung in der Verdampfungseinrichtung bei einem über dem atmosphärischen Druck liegenden Druck durch Verdampfung konzentriert wird und die Anlage so ausgestaltet ist, dass das Konzentrieren der Extraktionsmittel enthaltenden Lösung in der Verdampfungseinrichtung bei einem höheren Druck als das extraktive Destillieren in der Destillationseinrichtung durchgeführt wird.

Gemäß einer bevorzugten Ausführungsform der vorliegenden Erfindung ist die Verdampfungseinrichtung so ausgestaltet, dass die Extraktionsmittel enthaltende Lösung darin bei einem absoluten Druck von mehr als dem in dem meteorologischen Mittel vorliegenden Normaldruck, welcher bei Meereshöhe 0,101325 MPa beträgt, bis 1,5 MPa, bevorzugt von 0,15 bis 1 MPa, besonders bevorzugt von 0,2 bis 0,5 MPa, ganz besonders bevorzugt von 0,25 bis 0,4 MPa und höchst bevorzugt von 0,3 bis 0,35 MPa durch Verdampfung konzentriert wird.

In Weiterbildung des Erfindungsgedankens wird es vorgeschlagen, die Verdampfungseinrichtung so auszugestalten, dass die Extraktionsmittel enthaltende Lösung in der Verdampfungseinrichtung bei einer Temperatur von 80 bis 300°C, bevorzugt von 100 bis 260°C, besonders bevorzugt von 120 bis 220°C, ganz besonders bevorzugt von 140 bis 200°C und höchst bevorzugt von 160 bis 180°C konzentriert wird.

Ferner ist es bevorzugt, dass die Verdampfungseinrichtung wenigstens einen Verdampfer umfasst, welcher aus der Gruppe bestehend aus Naturumlaufverdampfern, Zwangsumlaufverdampfern, Kettle-Verdampfern, Fallfilmverdampfern und beliebigen Kombinationen der vorstehenden Verdampfer ausgewählt ist.

Gemäß einer besonders bevorzugten Ausführungsform der vorliegenden Erfindung ist es vorgesehen, dass die Verdampfungseinrichtung einstufig ausgebildet ist.

In einer dazu alternativen, wenn auch weniger bevorzugten, Ausführungsform der vorliegenden Erfindung ist die Verdampfungseinrichtung mehrstufig ausgebildet.

Vorzugsweise besteht die Innenfläche der Verdampfungseinrichtung zumindest abschnittsweise aus einem Material oder ist die Innenfläche der Verdampfungseinrichtung zumindest abschnittsweise mit einem Material ausgekleidet, welches aus der Gruppe bestehend aus Graphit, Siliciumcarbid, kohlenstofffaserhaltigen Verbundwerkstoffen, fluorierten Polymeren, Emaille, Glas, gummierten Stählen und beliebigen Kombinationen von zwei oder mehr der vorstehenden Materialien ausgewählt ist. Besonders bevorzugt sind alle Innenflächen der Verdampfungseinrichtung, welche mit der Extraktionsmittel enthaltenden Lösung in Kontakt kommen, vollständig mit einem vorgenannten Material ausgekleidet.

Vorzugsweise führt die wenigstens eine Rückfuhrleitung zur Rückführung der Extraktionsmittel enthaltenden Lösung von der Verdampfungseinrichtung nach dem Konzentrieren in den oberen und/oder mittleren Abschnitt der Destillationseinrichtung.

In Weiterbildung des Erfindungsgedankens wird es vorgeschlagen, dass die Anlage wenigstens eine Leitung aufweist, über welche der in der Verdampfungseinrichtung durch Verdampfung gebildete Brüden zum Beheizen der Destillationseinrichtung in direkten oder indirekten Kontakt mit Extraktionsmittel enthaltender Lösung aus dem unteren Abschnitt der Destillationseinrichtung gebracht wird.

In dem erstgenannten Fall kann beispielsweise eine Leitung zum Einleiten des Brüdens direkt in den unteren Abschnitt der Destillationseinrichtung vorgesehen sein.

Hingegen kann das Beheizen in dem letztgenannten Fall beispielsweise durch einen Wärmeaustauscher erfolgen. Bei dieser Ausführungsform mündet die Leitung vorzugsweise in einen Wärmeaustauscher, der so ausgestaltet ist, dass der Brüden darin kondensiert, wobei in den Wärmeaustauscher zudem eine Zufuhrleitung mündet, über welche diesem aus dem unteren Abschnitt der Destillationseinrichtung abgezogene Extraktionsmittel enthaltende Lösung zugeführt wird, wobei der Wärmeaustauscher so ausgestaltet ist, dass die dem Wärmeaustauscher über die Zufuhrleitung zugeführte Extraktionsmittel enthaltende Lösung durch die freigesetzte Kondensationswärme verdampft wird, und wobei der Wärmeaustauscher eine Abfuhrleitung aufweist, über welche der in dem Wärmeaustauscher gebildete Dampf in den unteren Abschnitt der Destillationseinrichtung zurückgeführt wird.

Vorzugsweise weist der Wärmeaustauscher eine weitere Abfuhrleitung auf und umfasst die Anlage einen weiteren Wärmeaustauscher, wobei die Abfuhrleitung des Wärmeaustauschers in den weiteren Wärmeaustauscher mündet und der weitere Wärmeaustauscher zudem eine Zufuhrleitung umfasst, über welche diesem aus der Verdampfungseinrichtung abgezogener Brüden zugeführt wird, um aus dem aus der Verdampfungseinrichtung abgezogenen Brüden vor dessen Einleitung in den Wärmeaustauscher gesättigten Dampf zu bilden.

Anstelle von oder zusätzlich zu der Brüdenverwertung kann stromabwärts der Destillationseinrichtung ein Verdampfer vorgesehen sein, welcher mit Frischdampf beheizt wird, um zumindest einen Teil des für den Betrieb der Destillationseinrichtung notwendigen Dampfes zu erzeugen.

Ferner ist es bevorzugt, dass die Abzugsleitung an dem oberen Abschnitt der Destillationseinrichtung zum Abziehen von konzentriertem Halogenwasserstoffdampf und/oder von konzentriertem Halogenwasserstoffgas in eine Entwässerungseinrichtung und bevorzugt in eine Kondensationseinrichtung mündet.

Wie vorstehend dargelegt, kann die Destillationseinrichtung beispielsweise eine Destillationssäule, eine Destillationskolonne oder einen Destillationsturm umfassen oder daraus bestehen.

Nachfolgend wird die vorliegende Erfindung anhand eines ein exemplarisches Ausführungsbeispiel beschreibenden, die vorliegende Erfindung aber nicht einschränkenden Beispiels beschrieben.

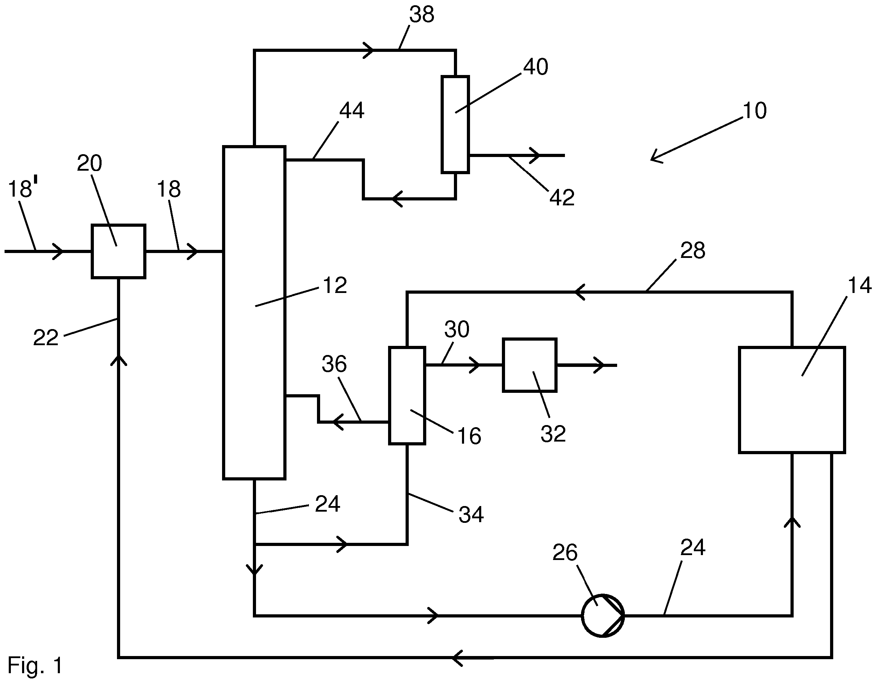

Die einzige Figur zeigt eine schematische Darstellung einer Anlage zum Konzentrieren einer wässrigen Halogenwasserstoffausgangslösung.

Die in der Figur dargestellte Anlage 10 zum Konzentrieren einer wässrigen Halogenwasserstoffausgangslösung umfasst eine als Rektifikationskolonne 12 ausgestaltete Destillationseinrichtung 12, eine Verdampfungseinrichtung 14 und einen Wärmeaustauscher 16 zum Beheizen des Sumpfproduktes der Rektifikationskolonne 12.

In den oberen Abschnitt der Rektifikationskolonne 12 führt eine Zufuhrleitung 18 für Extraktionsmittel enthaltende wässrige Halogenwasserstofflösung, welche zuvor in der Mischvorrichtung 20 durch Vermischen einer der Mischvorrichtung 20 über die Zufuhrleitung 18' zugeführten wässrigen Halogenwasserstoffausgangslösung sowie einer der Mischvorrichtung 20 über die Rückfuhrleitung 22 zugeführten und aus der Verdampfungseinrichtung 14 stammenden, konzentrierten Extraktionsmittel enthaltenden wässrigen Lösung hergestellt worden ist.

Am unteren Abschnitt bzw. Sumpf der Rektifikationskolonne 12 ist eine Abzugsleitung 24 für Extraktionsmittel enthaltende wässrige Lösung vorgesehen, welche mit einer Pumpe 26 versehen ist und in die Verdampfungseinrichtung 14 führt. Aus der Verdampfungseinrichtung 14 führt zum einen die Rückfuhrleitung 22 in die Mischvorrichtung 20. Zum anderen führt von der Verdampfungseinrichtung 14 eine Zufuhrleitung für Brüden 28 in den Wärmeaustauscher 16, welcher dort kondensiert wird und als Kondensat über die Abfuhrleitung für Brüden 30 aus dem Wärmeaustauscher 16 abgezogen und in einer Nachbehandlungseinrichtung 32 aufbereitet und schließlich aus der Anlage 10 abgezogen wird.

In den Wärmeaustauscher 16 führt ebenfalls eine Zufuhrleitung 34 für Extraktionsmittel enthaltende Lösung, welche in die Abzugsleitung 24 mündet und somit einen Teilstrom der aus dem Sumpf der Rektifikationskolonne 12 abgezogenen Extraktionsmittel enthaltende wässrige Lösung in den Wärmeaustauscher 16 führt. Diese wird in dem Wärmeaustauscher 16 verdampft und über die Abfuhrleitung 36 in den unteren Abschnitt der Rektifikationskolonne 12 zurückgeführt.

Am oberen Abschnitt bzw. Kopf der Rektifikationskolonne 12 ist eine Abzugsleitung 38 vorgesehen, über welche konzentrierter Halogenwasserstoffdampf und/oder Halogenwasserstoffgas einer Kondensationseinrichtung 40 zugeführt wird, aus der konzentrierte Halogenwasserstofflösung und/oder Halogenwasserstoffgas über die Produktabfuhrleitung 42 aus der Anlage 10 abgezogen wird. Zudem führt von der Kondensationseinrichtung 40 eine Rückfuhrleitung 44 in den oberen Abschnitt der Rektifikationskolonne 12 zurück.

Beim Betrieb der Anlage 10 wird der Rektifikationskolonne 12 Extraktionsmittel enthaltende Halogenwasserstoffausgangslösung, welche durch Vermischen der der Mischvorrichtung 20 über die Zufuhrleitung 18' zugeführten wässrigen Halogenwasserstoffausgangslösung sowie der der Mischvorrichtung 20 über die Rückfuhrleitung 22 zugeführten und aus der Verdampfungseinrichtung 14 stammenden, konzentrierten Extraktionsmittel enthaltenden wässrigen Lösung hergestellt worden ist, an deren oberen Abschnitt zugeführt und strömt in der Rektifikationskolonne 12 nach unten und damit im Gegenstrom zu von dem unteren Abschnitt der Rektifikationskolonne 12 aus aufsteigenden Dampf, welcher am Sumpf der Destillationskolonne durch Verdampfen erzeugt wird. Dabei nimmt die das Extraktionsmittel enthaltende wässrige Lösung aufgrund der hygroskopischen Eigenschaften des Extraktionsmittels Wasser aus der Dampfphase auf, während zugleich Halogenwasserstoffgas aus der wässrigen Lösung in die Dampfphase ausgetrieben wird und so die Dampfphase in Bezug auf den Halogenwasserstoff konzentriert wird. Aus diesem Grund wird im oberen Abschnitt bzw. an dem Kopf der Rektifikationskolonne 12, je nach Verfahrensführung, ein Halogenwasserstoffdampf oder reines Halogenwasserstoffgas erhalten, welcher bzw. welches aus dem Kopf der Rektifikationskolonne 12 abgezogen, durch Kondensation in der Kondensationseinrichtung 40 entwässert bzw. getrocknet wird und schließlich aus der Anlage 10 abgezogen wird.

Von dem unteren Ende der Rektifikationskolonne 12 wird eine Extraktionsmittel enthaltenden Lösung über die Abzugsleitung 24 abgezogen, von der ein Teilstrom über die Zufuhrleitung 34 in den Wärmeaustauscher 16 geführt wird und der andere Teilstrom über die Abzugsleitung 24 und die Pumpe 26 auf beispielsweise 0,3 MPa verdichtet und der Verdampfungseinrichtung 14 zugeführt wird. In der Verdampfungseinrichtung 14 wird die Extraktionsmittel enthaltende Lösung bei einem absoluten Druck von 0,3 MPa durch Verdampfung konzentriert, wobei die konzentrierte Extraktionsmittel enthaltende Lösung über die Rückfuhrleitung 22 in die Mischvorrichtung 20 und schließlich in die Rektifikationskolonne 12 zurückgeführt wird.

Der in der Verdampfungseinrichtung 14 entstehende Brüden wird über die Zufuhrleitung 28 in den Wärmeaustauscher 16 geführt, wo er kondensiert und von wo er schließlich in die Nachbehandlungseinrichtung 32 geführt und dort aufbereitet und von dort schließlich aus der Anlage 10 abgezogen wird. Durch die aufgrund der Kondensation des Brüdens freigesetzte Wärme verdampft die dem Wärmeaustauscher 16 über die Zufuhrleitung 34 aus dem Sumpf der Rektifikationskolonne 12 zugeführte Extraktionsmittel enthaltende Lösung zumindest teilweise und wird als Dampf über die Leitung 36 in den unteren Abschnitt der Rektifikationskolonne 12 zurückgeführt.

### Bezugszeichenliste

- 10: Anlage
- 12: Rektifikationskolonne/Destillationseinrichtung
- 14: Verdampfungseinrichtung
- 16: Wärmeaustauscher
- 18, 18': Flüssigkeitszufuhrleitung
- 20: Mischvorrichtung
- 22: Rückfuhrleitung für Extraktionsmittel enthaltende Lösung
- 24: Abzugsleitung für Extraktionsmittel enthaltende Lösung
- 26: Pumpe
- 28: Zufuhrleitung für Brüden
- 30: Abfuhrleitung für Brüden
- 32: Nachbehandlungseinrichtung
- 34: Zufuhrleitung für Extraktionsmittel enthaltende Lösung
- 36: Abfuhrleitung für Dampfmischung aus Extraktionsmittel enthaltender Lösung
- 38: Abzugsleitung für konzentrierten Halogenwasserstoffdampf und/oder Halogenwasserstoffgas
- 40: Kondensationseinrichtung/Entwässerungseinrichtung
- 42: Produktabfuhrleitung
- 44: Rückfuhrleitung für Kondensationsprodukt

## Patentansprüche

1. Verfahren zum Konzentrieren einer wässrigen Halogenwasserstoffausgangslösung, insbesondere von Salzsäure, welches die nachfolgenden Schritte umfasst:
- extraktives Destillieren der wässrigen Halogenwasserstoffausgangslösung in Gegenwart eines Extraktionsmittels in einer Destillationseinrichtung (12),
- Abziehen von Halogenwasserstoffdampf und/oder von Halogenwasserstoffgas aus dem oberen Abschnitt der Destillationseinrichtung (12),
- Abziehen einer Extraktionsmittel enthaltenden Lösung aus dem unteren Abschnitt der Destillationseinrichtung (12),
- Konzentrieren der aus dem unteren Abschnitt der Destillationseinrichtung (12) abgezogenen Extraktionsmittel enthaltenden Lösung in einer Verdampfungseinrichtung (14) und
- Zurückführen der in der Verdampfungseinrichtung (14) konzentrierten Extraktionsmittel enthaltenden Lösung in die Destillationseinrichtung (12), wobei die aus dem unteren Abschnitt der Destillationseinrichtung (12) abgezogene Extraktionsmittel enthaltende Lösung in der Verdampfungseinrichtung (14) bei einem über dem atmosphärischen Druck liegenden Druck durch Verdampfung konzentriert wird und dass das Konzentrieren der Extraktionsmittel enthaltenden Lösung in der Verdampfungseinrichtung (14) bei einem höheren Druck als das extraktive Destillieren in der Destillationseinrichtung (12) durchgeführt wird.

2. Verfahren nach Anspruch 1,
**dadurch gekennzeichnet, dass**
das Konzentrieren der Extraktionsmittel enthaltenden Lösung in der Verdampfungseinrichtung (14) bei einem absoluten Druck von mehr als dem in dem meteorologischen Mittel vorliegenden Normaldruck, welcher bei Meereshöhe 0,101325 MPa beträgt, bis 1,5 MPa, bevorzugt von 0,15 bis 1 MPa, besonders bevorzugt von 0,2 bis 0,5 MPa, ganz besonders bevorzugt von 0,25 bis 0,4 MPa und höchst bevorzugt von 0,3 bis 0,35 MPa durchgeführt wird.

3. Verfahren nach zumindest einem der vorstehenden Ansprüche,
**dadurch gekennzeichnet, dass**
das Konzentrieren der Extraktionsmittel enthaltenden Lösung in der Verdampfungseinrichtung (14) bei einer Temperatur von 80 bis 300°C, bevorzugt von 100 bis 260°C, besonders bevorzugt von 120 bis 220°C, ganz besonders bevorzugt von 140 bis 200°C und höchst bevorzugt von 160 bis 180°C durchgeführt wird.

4. Verfahren nach zumindest einem der vorstehenden Ansprüche,
**dadurch gekennzeichnet, dass**
das Konzentrieren der Extraktionsmittel enthaltenden Lösung in einer Verdampfungseinrichtung (14) durchgeführt wird, welche wenigstens einen Verdampfer umfasst, der aus der Gruppe bestehend aus Naturumlaufverdampfern, Zwangsumlaufverdampfern, Kettle-Verdampfern, Fallfilmverdampfern und beliebigen Kombinationen der vorstehenden Verdampfer ausgewählt wird.

5. Verfahren nach zumindest einem der vorstehenden Ansprüche,
**dadurch gekennzeichnet, dass**
das Konzentrieren der Extraktionsmittel enthaltenden Lösung in einer Verdampfungseinrichtung (14) durchgeführt wird, welche mehrstufig oder bevorzugt einstufig ausgebildet ist.

6. Verfahren nach zumindest einem der vorstehenden Ansprüche,
**dadurch gekennzeichnet, dass**
das Konzentrieren der Extraktionsmittel enthaltenden Lösung in einer Verdampfungseinrichtung (14) durchgeführt wird, deren Innenfläche zumindest abschnittsweise aus einem Material besteht oder mit einem Material ausgekleidet ist, welches aus der Gruppe bestehend aus Graphit, Siliciumcarbid, kohlenstofffaserhaltigen Verbundwerkstoffen, fluorierten Polymeren, Emaille, Glas, gummierten Stählen und beliebigen Kombinationen von zwei oder mehr der vorstehenden Materialien ausgewählt wird.

7. Verfahren nach Anspruch 6,
**dadurch gekennzeichnet, dass**
das Material der Auskleidung aus der Gruppe bestehend aus Graphit, Siliciumcarbid, Polytetrafluorethylen und beliebigen Kombinationen von zwei oder mehr der vorstehenden Materialien ausgewählt wird.

8. Verfahren nach zumindest einem der vorstehenden Ansprüche,
**dadurch gekennzeichnet, dass**
aus dem unteren Abschnitt der Destillationseinrichtung (12) eine Extraktionsmittel enthaltende Lösung mit einer Konzentration an Extraktionsmittel in der Lösung von 30 bis 60 Gew.-%, bevorzugt von 35 bis 55 Gew.-% und besonders bevorzugt von 40 bis 50 Gew.-% abgezogen wird.

9. Verfahren nach zumindest einem der vorstehenden Ansprüche,
**dadurch gekennzeichnet, dass**
die Extraktionsmittel enthaltende Lösung in der Verdampfungseinrichtung (14) bis zu einer Konzentration an Extraktionsmittel in der Lösung von 40 bis 80 Gew.-%, bevorzugt von 50 bis 70 Gew.-% und besonders bevorzugt von 55 bis 65 Gew.-% konzentriert wird.

10. Verfahren nach zumindest einem der vorstehenden Ansprüche,
**dadurch gekennzeichnet, dass**
das Extraktionsmittel wenigstens eine Substanz ausgewählt aus der Gruppe bestehend aus Schwefelsäure, Alkalimetallhalogeniden, Erdalkalimetallhalogeniden, Aluminiumhalogeniden, Ammoniumhalogeniden und beliebigen Kombinationen von zwei oder mehreren der vorstehend genannten Komponenten enthält oder bevorzugt daraus besteht.

11. Verfahren nach zumindest einem der vorstehenden Ansprüche,
**dadurch gekennzeichnet, dass**
die konzentrierte, Extraktionsmittel enthaltende Lösung nach dem Austritt aus der Verdampfungseinrichtung (14) in den oberen und/oder mittleren Abschnitt der Destillationseinrichtung (12) zurückgeführt wird.

12. Verfahren nach zumindest einem der vorstehenden Ansprüche,
**dadurch gekennzeichnet, dass**
der in der Verdampfungseinrichtung (14) bei der Konzentrierung der Extraktionsmittel enthaltenden Lösung durch Verdampfung gebildete Brüden zum Beheizen der Destillationseinrichtung (12) verwendet wird.

13. Verfahren nach Anspruch 12,
**dadurch gekennzeichnet, dass**
der in der Verdampfungseinrichtung (14) gebildete Brüden aus der Verdampfungseinrichtung (14) abgezogen und in einen Wärmeaustauscher (16) geführt sowie darin kondensiert wird und dem Wärmeaustauscher (16) ebenfalls aus dem unteren Abschnitt der Destillationseinrichtung (12) abgezogene Extraktionsmittel enthaltenden Lösung zugeführt wird, wobei die dem Wärmeaustauscher (16) zugeführte Extraktionsmittel enthaltenden Lösung durch die freigesetzte Kondensationswärme verdampft wird und dieser Dampf in den unteren Abschnitt der Destillationseinrichtung (12) zurückgeführt wird.

14. Verfahren nach Anspruch 13,
**dadurch gekennzeichnet, dass**
ein Teilstrom oder der gesamte Strom des in dem Wärmeaustauscher (16) kondensierten Brüdens mit dem aus der Verdampfungseinrichtung (14) abgezogenen Brüden vor dessen Einleitung in den Wärmeaustauscher (16) in Kontakt gebracht wird, um aus dem aus der Verdampfungseinrichtung (14) abgezogenen Brüden vor dessen Einleitung in den Wärmeaustauscher (16) gesättigten Dampf zu bilden.

15. Verfahren nach zumindest einem der vorstehenden Ansprüche,
**dadurch gekennzeichnet, dass**
die extraktive Destillation bei einem absoluten Druck von 0,01 bis 0,30 MPa und bevorzugt von 0,05 bis 0,15 MPa durchgeführt wird.

16. Verfahren nach zumindest einem der vorstehenden Ansprüche,
**dadurch gekennzeichnet, dass**
die Temperatur in dem unteren Abschnitt der Destillationseinrichtung (12) 50 bis 200°C und bevorzugt von 90 bis 140°C beträgt.

17. Verfahren nach zumindest einem der vorstehenden Ansprüche,
**dadurch gekennzeichnet, dass**
die Temperatur in dem oberen Abschnitt der Destillationseinrichtung (12) 30 bis 190°C und bevorzugt von 70 bis 130°C beträgt.

18. Verfahren nach zumindest einem der vorstehenden Ansprüche,
**dadurch gekennzeichnet, dass**
eine Halogenwasserstoffausgangslösung mit einem Halogenwasserstoffgehalt von 1 bis weniger als 35 Gew.-% und bevorzugt von 10 bis 15 Gew.-% eingesetzt wird.

19. Verfahren nach zumindest einem der vorstehenden Ansprüche,
**dadurch gekennzeichnet, dass**
der aus dem oberen Abschnitt der Destillationseinrichtung (12) abgezogene Halogenwasserstoffdampf und/oder das aus dem oberen Abschnitt der Destillationseinrichtung (12) abgezogene Halogenwasserstoffgas einen Halogenwasserstoffgehalt von wenigstens 30 Gew.-% und bevorzugt von 34 bis 38 Gew.-% aufweist.

20. Verfahren nach zumindest einem der vorstehenden Ansprüche,
**dadurch gekennzeichnet, dass**
der aus dem oberen Abschnitt der Destillationseinrichtung (12) abgezogene Halogenwasserstoffdampf und/oder das aus dem oberen Abschnitt der Destillationseinrichtung (12) abgezogene Halogenwasserstoffgas, bevorzugt Chlorwasserstoffgas, vorzugsweise durch Kondensation entwässert wird.

21. Anlage (10) zum Konzentrieren einer wässrigen Halogenwasserstoffausgangslösung, insbesondere von Salzsäure, umfassend:
- eine Destillationseinrichtung (12) zum extraktiven Destillieren der wässrigen Halogenwasserstoffausgangslösung in der Gegenwart eines Extraktionsmittels,
- wenigstens eine Abzugsleitung (38) an dem oberen Abschnitt der Destillationseinrichtung (12) zum Abziehen von konzentriertem Halogenwasserstoffdampf und/oder von Halogenwasserstoffgas aus dem oberen Abschnitt der Destillationseinrichtung (12),
- wenigstens eine Abzugsleitung (24) an dem unteren Abschnitt der Destillationseinrichtung (12) zum Abziehen einer Extraktionsmittel enthaltenden Lösung aus dem unteren Abschnitt der Destillationseinrichtung (12),
- eine Verdampfungseinrichtung (14) zum Konzentrieren der aus dem unteren Abschnitt der Destillationseinrichtung (12) abgezogenen Extraktionsmittel enthaltenden Lösung und
- eine Rückfuhrleitung (22) zur Rückführung von aus der Verdampfungseinrichtung (14) abgezogener konzentrierter Extraktionsmittel enthaltenden Lösung in die Destillationseinrichtung (12),
wobei die Verdampfungseinrichtung (14) so ausgestaltet ist, dass die aus dem unteren Abschnitt der Destillationseinrichtung (12) abgezogene Extraktionsmittel enthaltende Lösung in der Verdampfungseinrichtung (14) bei einem über dem atmosphärischen Druck liegenden Druck durch Verdampfung konzentriert wird und die Anlage so ausgestaltet ist, dass das Konzentrieren der Extraktionsmittel enthaltenden Lösung in der Verdampfungseinrichtung (14) bei einem höheren Druck als das extraktive Destillieren in der Destillationseinrichtung (12) durchgeführt wird.

22. Anlage (10) nach Anspruch 21,
**dadurch gekennzeichnet, dass**
die Verdampfungseinrichtung (14) so ausgestaltet ist, dass die Extraktionsmittel enthaltende Lösung darin bei einem absoluten Druck von mehr als dem in dem meteorologischen Mittel vorliegenden Normaldruck bis 1,5 MPa, bevorzugt von 0,15 bis 1 MPa, besonders bevorzugt von 0,2 bis 0,5 MPa, ganz besonders bevorzugt von 0,25 bis 0,4 MPa und höchst bevorzugt von 0,3 bis 0,35 MPa durch Verdampfung konzentriert wird.

23. Anlage (10) nach Anspruch 21 oder 22,
**dadurch gekennzeichnet, dass**
die Verdampfungseinrichtung (14) so ausgestaltet ist, dass die Extraktionsmittel enthaltende Lösung in der Verdampfungseinrichtung (14) bei einer Temperatur von 80 bis 300°C, bevorzugt von 100 bis 260°C, besonders bevorzugt von 120 bis 220°C, ganz besonders bevorzugt von 140 bis 200°C und höchst bevorzugt von 160 bis 180°C konzentriert wird.

24. Anlage (10) nach zumindest einem der Ansprüche 21 bis 23,
**dadurch gekennzeichnet, dass**
die Verdampfungseinrichtung (14) wenigstens einen Verdampfer umfasst, welcher aus der Gruppe bestehend aus Naturumlaufverdampfern, Zwangsumlaufverdampfern, Kettle-Verdampfern, Fallfilmverdampfern und beliebigen Kombinationen der vorstehenden Verdampfer ausgewählt ist.

25. Anlage (10) nach zumindest einem der Ansprüche 21 bis 24,
**dadurch gekennzeichnet, dass**
die Verdampfungseinrichtung (14) mehrstufig oder bevorzugt einstufig ausgebildet ist.

26. Anlage (10) nach zumindest einem der Ansprüche 21 bis 25,
**dadurch gekennzeichnet, dass**
die Innenfläche der Verdampfungseinrichtung (14) zumindest abschnittsweise aus einem Material besteht oder die Innenfläche der Verdampfungseinrichtung (14) zumindest abschnittsweise mit einem Material ausgekleidet ist, welches aus der Gruppe bestehend aus Graphit, Siliciumcarbid, kohlenstofffaserhaltigen Verbundwerkstoffen, fluorierten Polymeren, Emaille, Glas, gummierten Stählen und beliebigen Kombinationen von zwei oder mehr der vorstehenden Materialien ausgewählt ist.

27. Anlage (10) nach zumindest einem der Ansprüche 21 bis 26,
**dadurch gekennzeichnet, dass**
die wenigstens eine Rückfuhrleitung (22) zur Rückführung der Extraktionsmittel enthaltenden Lösung von der Verdampfungseinrichtung (14) nach dem Konzentrieren in den oberen und/oder mittleren Abschnitt der Destillationseinrichtung (12) führt.

28. Anlage (10) nach zumindest einem der Ansprüche 21 bis 27,
**dadurch gekennzeichnet, dass**
diese wenigstens eine Leitung (28) aufweist, über welche der in der Verdampfungseinrichtung (14) durch Verdampfung gebildete Brüden zum Beheizen der Destillationseinrichtung (12) in direkten Kontakt mit Extraktionsmittel enthaltender Lösung aus dem unteren Abschnitt der Destillationseinrichtung (12) gebracht wird.

29. Anlage (10) nach zumindest einem der Ansprüche 21 bis 27,
**dadurch gekennzeichnet, dass**
diese wenigstens eine Leitung (28) aufweist, über welche der in der Verdampfungseinrichtung (14) durch Verdampfung gebildete Brüden zum Beheizen der Destillationseinrichtung (12) in indirekten Kontakt mit Extraktionsmittel enthaltender Lösung aus dem unteren Abschnitt der Destillationseinrichtung (12) gebracht wird.

30. Anlage (10) nach Anspruch 28. oder 29,
**dadurch gekennzeichnet, dass**
die Leitung (28) in einen Wärmeaustauscher (16) mündet, der so ausgestaltet ist, dass der Brüden darin kondensiert, wobei in den Wärmeaustauscher (16) zudem eine Zufuhrleitung (34) mündet, über welche diesem aus dem unteren Abschnitt der Destillationseinrichtung (12) abgezogene Extraktionsmittel enthaltende Lösung zugeführt wird, wobei der Wärmeaustauscher (16) so ausgestaltet ist, dass die dem Wärmeaustauscher (16) über die Zufuhrleitung (34) zugeführte Extraktionsmittel enthaltende Lösung durch die freigesetzte Kondensationswärme verdampft wird, und wobei der Wärmeaustauscher (16) eine Abfuhrleitung (36) aufweist, über welche der in dem Wärmeaustauscher (16) gebildete Dampf in den unteren Abschnitt der Destillationseinrichtung (12) zurückgeführt wird.

31. Anlage (10) nach Anspruch 30,
**dadurch gekennzeichnet, dass**
der Wärmeaustauscher (16) eine weitere Abfuhrleitung aufweist und die Anlage (10) einen weiteren Wärmeaustauscher umfasst, wobei die Abfuhrleitung des Wärmeaustauschers (16) in den weiteren Wärmeaustauscher mündet und der weitere Wärmeaustauscher zudem eine Zufuhrleitung umfasst, über welche diesem über die Leitung aus der Verdampfungseinrichtung abgezogener Brüden zugeführt wird, um aus dem aus der Verdampfungseinrichtung abgezogenen Brüden vor dessen Einleitung in den Wärmeaustauscher (16) gesättigten Dampf zu bilden.

32. Anlage (10) nach zumindest einem der Ansprüche 21 bis 31,
**dadurch gekennzeichnet, dass**
die Abzugsleitung (38) an dem oberen Abschnitt der Destillationseinrichtung (12) zum Abziehen von konzentriertem Halogenwasserstoffdampf und/oder von konzentriertem Halogenwasserstoffgas in eine Entwässerungseinrichtung (40) und bevorzugt in eine Kondensationseinrichtung (40) mündet.

33. Anlage (10) nach zumindest einem der Ansprüche 21 bis 32,
**dadurch gekennzeichnet, dass**
die Destillationseinrichtung (12) eine Destillationssäule oder einen Destillationsturm umfasst.

## Claims

1. Method for concentrating an aqueous hydrogen halide starting solution, in particular hydrochloric acid, which comprises the steps of:
- extractive distillation of the aqueous hydrogen halide starting solution in the presence of an extraction agent in a distillation device (12),
- withdrawing hydrogen halide vapour and/or hydrogen halide gas from the upper portion of the distillation device (12),
- withdrawing a solution containing extraction agent from the lower portion of the distillation device (12),
- concentrating the solution containing extraction agent which is withdrawn from the lower portion of the distillation device (12) in an evaporation device (14), and
- returning the solution containing extraction agent which is concentrated in the evaporation device (14) to the distillation device (12),
wherein the solution containing extraction agent withdrawn from the lower portion of the distillation device (12) is concentrated in the evaporation device (14) by evaporation at a pressure above atmospheric pressure, and the concentration of the solution containing extraction agent in the evaporation device (14) is carried out at a higher pressure than the extractive distillation in the distillation device (12).

2. Method according to claim 1, **characterised in that** the concentration of the solution containing extraction agent in the evaporation device (14) is carried out at an absolute pressure of greater than the normal pressure prevailing in the meteorological mean, which pressure is, at sea level, 0.101325 MPa, and up to 1.5 MPa, preferably from 0.15 MPa to 1 MPa, more preferably from 0.2 to 0.5 MPa, particularly preferably from 0.25 to 0.4 MPa and most preferably from 0.3 to 0.35 MPa.

3. Method according to at least one of the preceding claims, **characterised in that** the concentration of the solution containing extraction agent in the evaporation device (14) is carried out at a temperature from 80 to 300 °C, preferably from 100 to 260 °C, more preferably from 120 to 220 °C, particularly preferably from 140 to 200 °C and most preferably from 160 to 180 °C.

4. Method according to at least one of the preceding claims, **characterised in that** the concentration of the solution containing extraction agent is carried out in an evaporation device (14) which comprises at least one evaporator which is selected from the group consisting of natural circulation evaporators, forced circulation evaporators, kettle evaporators, falling film evaporators and any combinations of the above-mentioned evaporators.

5. Method according to at least one of the preceding claims, **characterised in that** the concentration of the solution containing extraction agent is carried out in an evaporation device (14) which has a multi-stage or preferably single-stage design.

6. Method according to at least one of the preceding claims, **characterised in that** the concentration of the solution containing extraction agent is carried out in an evaporation device (14), the inner surface of which consists of or is cladded with, at least in portions, a material which is selected from the group consisting of graphite, silicon carbide, composite materials containing carbon fibre, fluorinated polymers, enamels, glass, rubberised steels and any combinations of two or more of the above-mentioned materials.

7. Method according to claim 6, **characterised in that** the cladding material is selected from the group consisting of graphite, silicon carbide, polytetrafluoroethylene and any combinations of two or more of the above-mentioned materials.

8. Method according to at least one of the preceding claims, **characterised in that** a solution containing extraction agent is withdrawn from the lower portion of the distillation device (12) at a concentration of extraction agent in the solution from 30 to 60 wt.%, preferably from 35 to 55 wt.% and more preferably from 40 to 50 wt.%.

9. Method according to at least one of the preceding claims, **characterised in that** the solution containing extraction agent is concentrated in the evaporation device (14) up to a concentration of extraction agent in the solution from 40 to 80 wt.%, preferably from 50 to 70 wt.% and more preferably from 55 to 65 wt.%.

10. Method according to at least one of the preceding claims, **characterised in that** the extraction agent contains or preferably consists of at least one substance selected from the group consisting of sulphuric acid, alkali metal halides, alkaline earth metal halides, aluminium halides, ammonium halides and any combinations of two or more of the above-mentioned components.

11. Method according to at least one of the preceding claims, **characterised in that** the concentrated solution containing extraction agent is returned to the upper and/or central portion of the distillation device (12) after exiting the evaporation device (14).

12. Method according to at least one of the preceding claims, **characterised in that** the exhaust vapour formed by evaporation in the evaporation device (14) during concentration of the solution containing extraction agent is used to heat the distillation device (12).

13. Method according to claim 12, **characterised in that** the exhaust vapour formed in the evaporation device (14) is withdrawn from the evaporation device (14) and is fed into a heat exchanger (16) and is condensed therein, and the solution containing extraction agent which is withdrawn from the lower portion of the distillation device (12) is also fed to the heat exchanger (16), wherein the solution containing extraction agent which is fed to the heat exchanger (16) is evaporated by the released condensation heat and this vapour is returned to the lower portion of the distillation device (12).

14. Method according to claim 13, **characterised in that** a partial stream or the complete stream of the exhaust vapour which is condensed in the heat exchanger (16) is brought into contact with the exhaust vapour which is withdrawn from the evaporation device (14) before it is introduced into the heat exchanger (16) in order to form saturated vapour from the exhaust vapour which is withdrawn from the evaporation device (14) before it is introduced into the heat exchanger (16).

15. Method according to at least one of the preceding claims, **characterised in that** the extractive distillation is carried out at an absolute pressure from 0.01 to 0.30 MPa and preferably from 0.05 to 0.15 MPa.

16. Method according to at least one of the preceding claims, **characterised in that** the temperature in the lower portion of the distillation device (12) is 50 to 200 °C and preferably from 90 to 140 °C.

17. Method according to at least one of the preceding claims, **characterised in that** the temperature in the upper portion of the distillation device (12) is 30 to 190 °C and preferably from 70 to 130 °C.

18. Method according to at least one of the preceding claims, **characterised in that** a hydrogen halide starting solution having a hydrogen halide content from 1 to less than 35 wt.% and preferably from 10 to 15 wt.% is used.

19. Method according to at least one of the preceding claims, **characterised in that** the hydrogen halide vapour withdrawn from the upper portion of the distillation device (12) and/or the hydrogen halide gas withdrawn from the upper portion of the distillation device (12) has a hydrogen halide content from at least 30 wt.% and preferably from 34 to 38 wt.%.

20. Method according to at least one of the preceding claims, **characterised in that** the hydrogen halide vapour withdrawn from the upper portion of the distillation device (12) and/or the hydrogen halide gas, preferably hydrogen chloride gas, withdrawn from the upper portion of the distillation device (12) is preferably dehydrated by condensation.

21. Installation (10) for concentrating an aqueous hydrogen halide starting solution, in particular hydrochloric acid, comprising:
- a distillation device (12) for the extractive distillation of the aqueous hydrogen halide starting solution in the presence of an extraction agent,
- at least one withdrawal line (38) on the upper portion of the distillation device (12) for withdrawing concentrated hydrogen halide vapour and/or hydrogen halide gas from the upper portion of the distillation device (12),
- at least one withdrawal line (24) on the lower portion of the distillation device (12) for withdrawing a solution containing extraction agent from the lower portion of the distillation device (12),
- an evaporation device (14) for concentrating the solution containing extraction agent which is withdrawn from the lower portion of the distillation device (12), and
- a return line (22) for returning concentrated solution containing extraction agent withdrawn from the evaporation device (14) to the distillation device (12),
wherein the evaporation device (14) is designed in such a way that the solution containing extraction agent withdrawn from the lower portion of the distillation device (12) is concentrated in the evaporation device (14) by evaporation at a pressure above atmospheric pressure, and the installation is designed in such a way that the concentration of the solution containing extraction agent in the evaporation device (14) is carried out at a higher pressure than the extractive distillation in the distillation device (12).

22. Installation (10) according to claim 21, **characterised in that** the evaporation device (14) is designed in such a way that the solution containing extraction agent is concentrated therein by evaporation at an absolute pressure of greater than the normal pressure prevailing in the meteorological mean, which pressure is up to 1.5 MPa, preferably from 0.15 to 1 MPa, more preferably from 0.2 to 0.5 MPa, particularly preferably from 0.25 to 0.4 MPa and most preferably from 0.3 to 0.35 MPa.

23. Installation (10) according to either claim 21 or claim 22, **characterised in that** the evaporation device (14) is designed in such a way that the solution containing extraction agent is concentrated in the evaporation device (14) at a temperature from 80 to 300 °C, preferably from 100 to 260 °C, more preferably from 120 to 220 °C, particularly preferably from 140 to 200 °C and most preferably from 160 to 180 °C.

24. Installation (10) according to at least one of claims 21 to 23, **characterised in that** the evaporation device (14) comprises at least one evaporator which is selected from the group consisting of natural circulation evaporators, forced circulation evaporators, kettle evaporators, falling film evaporators and any combinations of the above-mentioned evaporators.

25. Installation (10) according to at least one of claims 21 to 24, **characterised in that** the evaporation device (14) has a multi-stage or preferably single-stage design.

26. Installation (10) according to at least one of claims 21 to 25, **characterised in that** the inner surface of the evaporation device (14) consists, at least in portions, of a material or the inner surface of the evaporation device (14) is cladded, at least in portions, with a material which is selected from the group consisting of graphite, silicon carbide, composite materials containing carbon fibre, fluorinated polymers, enamels, glass, rubberised steels and any combinations of two or more of the above-mentioned materials.

27. Installation (10) according to at least one of claims 21 to 26, **characterised in that** the at least one return line (22) for returning the solution containing extraction agent feeds the solution into the upper and/or central portion of the distillation device (12) from the evaporation device (14) after concentration.

28. Installation (10) according to at least one of claims 21 to 27, **characterised in that** the installation comprises at least one line (28) via which the exhaust vapour formed by evaporation in the evaporation device (14) is brought into direct contact with the solution containing extraction agent from the lower portion of the distillation device (12) in order to heat the distillation device (12).

29. Installation (10) according to at least one of claims 21 to 27, **characterised in that** the installation comprises at least one line (28) via which the exhaust vapour formed by evaporation in the evaporation device (14) is brought into indirect contact with the solution containing extraction agent from the lower portion of the distillation device (12) in order to heat the distillation device (12).

30. Installation (10) according to either claim 28 or claim 29, **characterised in that** the line (28) opens into a heat exchanger (16) which is designed in such a way that the exhaust vapour is condensed therein, wherein a feed line (34), via which solution containing extraction agent withdrawn from the lower portion of the distillation device (12) is fed into the heat exchanger, also opens into the heat exchanger (16), wherein the heat exchanger (16) is designed in such a way that the solution containing extraction agent fed to the heat exchanger (16) via the feed line (34) is evaporated by the released condensation heat, and wherein the heat exchanger (16) has a discharge line (36) via which the vapour formed in the heat exchanger (16) is returned to the lower portion of the distillation device (12).

31. Installation (10) according to claim 30, **characterised in that** the heat exchanger (16) comprises an additional discharge line and the installation (10) comprises an additional heat exchanger, wherein the discharge line of the heat exchanger (16) opens into the additional heat exchanger and the additional heat exchanger also comprises a feed line via which exhaust vapour withdrawn from the evaporation device is fed to the heat exchanger via the line in order to form saturated vapour from the exhaust vapour which is withdrawn from the evaporation device before it is introduced into the heat exchanger (16).

32. Installation (10) according to at least one of claims 21 to 31, **characterised in that** the withdrawal line (38) on the upper portion of the distillation device (12) for withdrawing concentrated hydrogen halide vapour and/or concentrated hydrogen halide gas opens into a dehydration device (40) and preferably into a condensation device (40).

33. Installation (10) according to at least one of claims 21 to 32, **characterised in that** the distillation device (12) comprises a distillation column or a distillation tower.

## Revendications

1. Procédé de concentration d'une solution aqueuse de départ d'un hydracide halogéné, en particulier d'acide chlorhydrique, comprenant les étapes suivantes :
- distillation extractive de la solution aqueuse de départ de l'hydracide halogéné en présence d'un agent d'extraction dans un système de distillation (12),
- soutirage de vapeur et/ou de gaz de l'hydracide halogéné à la partie supérieure du système de distillation (12),
- soutirage d'une solution contenant de l'agent d'extraction dans la partie inférieure du système de distillation (12),
- concentration de la solution contenant de l'agent d'extraction soutirée à la partie inférieure du système de distillation (12) dans un système d'évaporation (14), et
- recyclage de la solution contenant de l'agent d'extraction concentré dans le système d'évaporation (14) dans le système de distillation (12),
dans lequel la solution contenant de l'agent d'extraction soutirée à la partie inférieure du système de distillation (12) est concentrée dans le système de d'évaporation (14) par évaporation sous une pression supérieure à la pression atmosphérique, et la concentration de la solution contenant de l'agent d'extraction dans le système d'évaporation (14) est effectuée sous une pression supérieure à celle de la distillation extractive dans le système de distillation (12).

2. Procédé selon la revendication 1, **caractérisé en ce que** la concentration de la solution contenant de l'agent d'extraction dans le système d'évaporation (14) est effectuée sous une pression absolue supérieure à la pression normale présente dans le milieu météorologique, laquelle pression normale est de 0,101325 MPa au niveau de la mer, jusqu'à 1,5 MPa, de préférence comprise entre 0,15 et 1 MPa, de manière particulièrement préférée entre 0,2 et 0,5 MPa, mieux encore entre 0,25 et 0,4 MPa et plus préférentiellement entre 0,3 et 0,35 MPa.

3. Procédé selon au moins l'une des revendications précédentes, **caractérisé en ce que** la concentration de la solution contenant de l'agent d'extraction dans le système d'évaporation (14) est effectuée à une température comprise entre 80 et 300 °C, de préférence entre 100 et 260 °C, de manière particulièrement préférée entre 120 et 220 °C, mieux encore entre 140 et 200 °C et plus préférentiellement entre 160 et 180 °C.

4. Procédé selon au moins l'une des revendications précédentes, **caractérisé en ce que** la concentration de la solution contenant de l'agent d'extraction est effectuée dans un système d'évaporation (14) comprenant au moins un évaporateur choisi dans le groupe constitué par les évaporateurs à circulation naturelle, les évaporateurs à circulation forcée, les évaporateurs à bouilloire, les évaporateurs à film tombant et toute combinaison des évaporateurs précédents.

5. Procédé selon au moins l'une des revendications précédentes, **caractérisé en ce que** la concentration de la solution contenant de l'agent d'extraction est effectuée dans un système d'évaporation (14) conçu pour être à plusieurs étages ou de préférence à un seul étage.

6. Procédé selon au moins l'une des revendications précédentes, **caractérisé en ce que** la concentration de la solution contenant de l'agent d'extraction est effectuée dans un système d'évaporation (14), la surface intérieure du système d'évaporation étant au moins partiellement constituée ou revêtue d'un matériau choisi dans le groupe constitué par le graphite, le carbure de silicium, les composites contenant des fibres de carbone, les polymères fluorés, l'émail, le verre, les aciers caoutchoutés et toute combinaison de deux ou de plusieurs des matériaux précédents.

7. Procédé selon la revendication 6, **caractérisé en ce que** le matériau du revêtement est choisi dans le groupe constitué par le graphite, le carbure de silicium, le polytétrafluoroéthylène et toute combinaison de deux ou de plusieurs des matériaux précédents

8. Procédé selon au moins l'une des revendications précédentes, **caractérisé en ce que** l'on soutire à la partie inférieure du système de distillation (12) une solution contenant de l'agent d'extraction présentant dans la solution, une concentration d'agent d'extraction comprise entre 30 et 60 % en poids, de préférence entre 35 et 55 % en poids et de manière particulièrement préférée entre 40 et 50 % en poids.

9. Procédé selon au moins l'une des revendications précédentes, **caractérisé en ce que** la solution contenant de l'agent d'extraction est concentrée dans le système d'évaporation (14) jusqu'à une concentration d'agent d'extraction dans la solution comprise entre 40 et 80 % en poids, de préférence entre 50 et 70 % en poids et de manière particulièrement préférée entre 55 et 65 % en poids.

10. Procédé selon au moins l'une des revendications précédentes, **caractérisé en ce que** l'agent d'extraction contient ou est de préférence constitué d'au moins une substance choisie dans le groupe constitué par l'acide sulfurique, les halogénures de métaux alcalins, les halogénures de métaux alcalino-terreux, les halogénures d'aluminium, les halogénures d'ammonium et toute combinaison de deux ou de plusieurs des composants précédents.

11. Procédé selon au moins l'une des revendications précédentes, **caractérisé en ce que** la solution concentrée contenant de l'agent d'extraction est renvoyée dans la partie supérieure et/ou centrale du système de distillation (12) après avoir quitté le système d'évaporation (14).

12. Procédé selon au moins l'une des revendications précédentes, **caractérisé en ce que** les vapeurs formées par l'évaporation dans le système d'évaporation (14) pendant la concentration de la solution contenant de l'agent d'extraction sont utilisées pour chauffer le système de distillation (12).

13. Procédé selon la revendication 12, **caractérisé en ce que** les vapeurs formées dans le système d'évaporation (14) sont soutirées au système d'évaporation (14) et introduites dans un échangeur de chaleur (16) et condensées dans celui-ci, et la solution contenant de l'agent d'extraction, également soutirée de la partie inférieure du système de distillation (12), est introduite dans l'échangeur de chaleur (16), la solution contenant de l'agent d'extraction fournie à l'échangeur de chaleur (16) étant vaporisée par la chaleur de condensation libérée et ladite vapeur étant renvoyée à la partie inférieure du système de distillation (12).

14. Procédé selon la revendication 13, **caractérisé en ce qu'**une partie ou la totalité du flux de la vapeur condensée dans l'échangeur de chaleur (16) est mise en contact avec les vapeurs soutirées au système d'évaporation (14) avant qu'elle ne soit introduite dans l'échangeur de chaleur (16) pour former une vapeur saturée à partir des vapeurs soutirées au système d'évaporation (14) avant qu'elle ne soit introduite dans l'échangeur de chaleur (16).

15. Procédé selon au moins l'une des revendications précédentes, **caractérisé en ce que** la distillation extractive est effectuée sous une pression absolue comprise entre 0,01 et 0,30 MPa et de préférence entre 0,05 et 0,15 MPa.

16. Procédé selon au moins l'une des revendications précédentes, **caractérisé en ce que** la température dans la partie inférieure du système de distillation (12) est comprise entre 50 et 200° C et de préférence entre 90 et 140° C.

17. Procédé selon au moins l'une des revendications précédentes, **caractérisé en ce que** la température dans la partie supérieure du système de distillation (12) est comprise entre 30 et 190 °C et de préférence entre 70 et 130 °C.

18. Procédé selon au moins l'une des revendications précédentes, **caractérisé en ce que** l'on utilise une solution de départ de l'hydracide halogéné ayant une teneur en hydracide halogéné comprise entre 1 et moins de 35 % en poids et de préférence entre 10 et 15 % en poids.

19. Procédé selon au moins l'une des revendications précédentes, **caractérisé en ce que** la vapeur d'hydracide halogéné soutirée à la partie supérieure du système de distillation (12) et/ou le gaz d'hydracide halogéné soutiré à la partie supérieure du système de distillation (12) a une teneur en hydracide halogéné d'au moins 30 % en poids et de préférence comprise entre 34 et 38 % en poids.

20. Procédé selon au moins l'une des revendications précédentes, **caractérisé en ce que** la vapeur d'hydracide halogéné soutirée à la partie supérieure du système de distillation (12) et/ou le gaz d'hydracide halogéné, de préférence le gaz de chlorure d'hydrogène, soutiré à la partie supérieure du système de distillation (12) est déshydraté, de préférence par condensation.

21. Installation (10) pour la concentration d'une solution aqueuse de départ d'hydracide halogéné, en particulier de d'acide chlorhydrique, comprenant :
- un dispositif de distillation (12) pour la distillation extractive de la solution aqueuse de départ de l'hydracide halogéné en présence d'un agent d'extraction,
- au moins une conduite de soutirage (38) au niveau de la partie supérieure du système de distillation (12) pour soutirer de la vapeur d'hydracide halogéné concentrée et/ou du gaz d'hydracide halogéné à la partie supérieure du système de distillation (12),
- au moins une conduite de soutirage (24) au niveau de la partie inférieure du système de distillation (12) pour soutirer une solution contenant de l'agent d'extraction provenant de la partie inférieure du système de distillation (12),
- un système d'évaporation (14) pour la concentration de la solution contenant de l'agent d'extraction soutirée à la partie inférieure du système de distillation (12), et
- une conduite de recyclage (22) pour le recyclage de la solution contenant de l'agent d'extraction concentré soutiré au système d'évaporation (14) dans le système de distillation (12),
dans laquelle le système d'évaporation (14) est conçu de telle manière que la solution contenant de l'agent d'extraction soutirée à la partie inférieure du système de distillation (12) est concentrée dans le système d'évaporation (14) par évaporation sous une pression supérieure à la pression atmosphérique, et l'installation étant conçue de telle manière que la concentration de la solution contenant de l'agent d'extraction dans le système d'évaporation (14) est effectuée sous une pression supérieure à celle de la distillation extractive dans le système de distillation (12).

22. Installation (10) selon la revendication 21, **caractérisée en ce que** le dispositif d'évaporation (14) est conçu de telle manière que la solution contenant de l'agent d'extraction y est concentrée par évaporation sous une pression absolue supérieure à la pression normale présente dans le milieu météorologique, ladite pression absolue étant de 1,5 MPa, de préférence comprise entre 0,15 et 1 MPa, de manière particulièrement préférée entre 0,2 et 0,5 MPa, mieux encore entre 0,25 et 0,4 MPa et plus préférentiellement entre 0,3 et 0,35 MPa.

23. Installation (10) selon la revendication 21 ou 22, **caractérisée en ce que** le système d'évaporation (14) est conçu de telle manière que la solution contenant de l'agent d'extraction est concentrée dans le système d'évaporation (14) à une température comprise entre 80 et 300 °C, de préférence entre 100 et 260 °C, de manière particulièrement préférée entre 120 et 220 °C, de manière très préférée préférablement entre 140 et 200 °C et plus préférentiellement entre 160 et 180 °C.

24. Installation (10) selon au moins l'une des revendications 21 à 23, **caractérisée en ce que** le système d'évaporation (14) comprend au moins un évaporateur choisi dans le groupe constitué par les évaporateurs à circulation naturelle, les évaporateurs à circulation forcée, les évaporateurs à bouilloire, les évaporateurs à film tombant et toute combinaison des évaporateurs précédents.

25. Installation (10) selon au moins l'une des revendications 21 à 24, **caractérisée en ce que** le système d'évaporation (14) est conçu pour être à plusieurs étages ou de préférence à un seul étage.

26. Installation (10) selon au moins l'une des revendications 21 à 25, **caractérisée en ce que** la surface intérieure du système d'évaporation (14) est au moins partiellement constituée d'un matériau, ou **en ce que** la surface intérieure du système d'évaporation (14) est au moins partiellement revêtue d'un matériau choisi dans le groupe constitué par le graphite, le carbure de silicium, les composites contenant des fibres de carbone, les polymères fluorés, l'émail, le verre, les aciers caoutchoutés et toute combinaison de deux ou de plusieurs des matériaux précédents.

27. Installation (10) selon au moins l'une des revendications 21 à 26, **caractérisée en ce que** la solution contenant au moins une conduite de recyclage (22) pour le recyclage de la solution contenant de l'agent d'extraction part du dispositif d'évaporation (14) et aboutit, après concentration, dans la partie supérieure et/ou centrale du dispositif de distillation (12).

28. Installation (10) selon au moins l'une des revendications 21 à 27, **caractérisée en ce qu'**elle comprend au moins une conduite (28) par laquelle la vapeur formée par évaporation dans le sens d'évaporation (14) est mise en contact direct avec une solution contenant de l'agent d'extraction provenant de la partie inférieure du système de distillation (12) pour chauffer le système de distillation (12).

29. Installation (10) selon au moins l'une des revendications 21 à 27, **caractérisée en ce qu'**elle comprend au moins une conduite (28) par laquelle les vapeurs formées dans le système d'évaporation (14) par évaporation est mise en contact indirect avec une solution contenant de l'agent d'extraction provenant de la partie inférieure du système de distillation (12) pour chauffer le système de distillation (12).

30. Installation (10) selon la revendication 28 ou 29, **caractérisée en ce que** la conduite (28) débouche dans un échangeur de chaleur (16) qui est conçu de telle manière que la vapeur s'y condense, dans laquelle une conduite d'alimentation (34), par laquelle une solution contenant de l'agent d'extraction soutirée à la partie inférieure du système de distillation (12) est amenée à l'échangeur de chaleur (16), débouche également dans ledit échangeur de chaleur, dans laquelle l'échangeur de chaleur (16) est conçu de telle manière que la solution contenant de l'agent d'extraction amenée à l'échangeur de chaleur (16) par la conduite d'alimentation (34) est vaporisée par la chaleur de condensation libérée, et dans laquelle l'échangeur de chaleur (16) comporte une conduite d'évacuation (36), par laquelle la vapeur formée dans l'échangeur de chaleur (16) est renvoyée dans la partie inférieure du système de distillation (12).

31. Installation (10) selon la revendication 30, **caractérisée en ce que** l'échangeur de chaleur (16) comporte une autre conduite d'évacuation, et **en ce que** l'installation (10) comprend un autre échangeur de chaleur, la conduite d'évacuation de l'échangeur de chaleur (16) débouchant dans l'autre échangeur de chaleur et l'autre échangeur de chaleur comprenant également une conduite d'alimentation, par laquelle des vapeurs soutirées au système d'évaporation sont amenées audit autre échangeur de chaleur par la conduite, de façon à former de la vapeur saturée à partir des vapeurs soutirées au système d'évaporation avant l'introduction de ladite vapeur dans l'échangeur de chaleur (16).

32. Installation (10) selon au moins l'une des revendications 21 à 31, **caractérisée en ce que** la conduite de soutirage (38) au niveau de la partie supérieure du système de distillation (12), destinée au soutirage de vapeur et/ou de gaz de l'hydracide halogéné concentré débouche dans un système de drainage (40) et de préférence dans un système de condensation (40).

33. Installation (10) selon au moins l'une des revendications 21 à 32, **caractérisée en ce que** le système de distillation (12) comprend une colonne ou une tour de distillation.
